# EUROPÄISCHE PATENTANMELDUNG

(11) **EP 4 851 893 A1**
(43) Veröffentlichungstag der Anmeldung: **09.12.2026**
(21) Anmeldenummer: 25180175.9
(22) Anmeldetag: 02.06.2025
(51) Int. Cl.: G06Q 10/20, B60C 23/04

(54) **REIFENDRUCKSENSORÜBERWACHUNG**

(71) Anmelder: Schmitz Cargobull AG, 48341 Altenberge (DE)
(72) Erfinder: Weyring, Bernd, 48629 Metelen (DE); Dr. Hergemöller, Fabian, 48268 Greven (DE); Dr. Ince, Cafer, 89075 Ulm (DE)
(74) Vertreter: Cohausz & Florack

(57) **Zusammenfassung**

Es werden Verfahren, Vorrichtungen und Systeme zur Überwachung von Reifendrucksensoren und Straßennutzfahrzeugen offenbart.

## Beschreibung

### Gebiet

Die Erfindung betrifft Verfahren und Vorrichtungen zur Überwachung von Reifendrucksensoren, insbesondere von Straßennutzfahrzeugen, insbesondere von bereiften Straßennutzfahrzeugen.

### Hintergrund

Heutzutage werden im privaten und gewerblichen Straßenverkehr fast ausschließlich bereifte Fahrzeuge betrieben, deren Räder mit gasgefüllten Reifen ausgestattet sind. Für die Funktionsfähigkeit dieser Räder ist ein ausreichender, jedoch nicht zu hoher Reifendruck notwendig. Ein zu niedriger Reifendruck kann beispielsweise den Rollwiderstand des Reifens und damit Verschleiß und Fahrkosten erhöhen. Ein zu hoher Reifendruck hingegen kann zu Beschädigungen des Reifens führen und damit zu Fahrtausfällen.

Eine manuelle Überwachung des Reifendrucks durch die Nutzer des jeweiligen Fahrzeugs ist aufwändig und wird allzu häufig nicht in der erforderlichen Regelmäßigkeit vollzogen. Die Folge ist ein erhöhtes Risiko eines falschen (insbesondere zu niedrigen aber auch möglicherweise zu hohen) Reifendrucks.

### Zusammenfassung einiger beispielhafter Ausführungsformen der Erfindung

Die Erfindung befasst sich unter anderem damit, eine Reifendrucküberwachung mit einer entsprechenden Sensorik gesichert bereitzustellen. An oder in einem Rad umfassend einen Reifen und eine Felge (z.B. und ein Ventil) wird hierbei ein jeweiliger Drucksensor verbaut, der den Druck des Gases im Reifen erfasst. Vorteilhafterweise kann eine teilweise automatisierte, sensorbasierte Reifendrucküberwachung den Nutzer seiner Pflicht entheben, den Reifendruck manuell zu erfassen. Damit wird das Risiko menschlichen Versagens in Form lückenhafter Reifendruckkontrollen reduziert. Die Fahrt wird sicherer und günstiger.

Es wurde gegenständlich erkannt, dass es eine der Herausforderungen sensorbasierter Reifendrucküberwachung ist, diese auch über längere Zeiträume von Monaten und Jahren vollständig funktionsfähig zu halten. Es wurde erkannt, dass eine Überwachung des Drucks einzelner Reifen eines Straßennutzfahrzeugs oft ungeplant endet. Grund hierfür können beispielsweise technische Ausfälle (z.B. von Sensoren und/oder Empfängern), aber auch unsachgemäße Änderung (z.B. Montage ungeeigneter Reifendrucksensoren und/oder Montage von Reifen ohne Reifendrucksensoren) sowie fehlerhafte Konfiguration (z.B. fehlendes Anlernen von Reifendrucksensoren, erfolglose Erkennung von Reifendrucksensoren von Empfängern von Signalen von Reifendrucksensoren) sein. Derartige Umstände können zu Einschränkungen der Überwachungsleistung führen. Durch einen nicht erkannten geringen Druck auf einzelnen oder mehreren Reifen kann ein erhöhter Kraftstoffverbrauch entstehen sowie Risiken für das Fahrzeug, den Fahrzeugführer und/oder übrige Verkehrsteilnehmer.

Während womöglich eine mangelnde Verfügbarkeit eines gegebenen Reifendrucksensors heutzutage bereits in einem Fahrzeug angezeigt werden kann, lässt sich bislang kein Rückschluss auf eine zugrundeliegende Ursache ziehen. Hierdurch kann es schwierig sein, angepasste Gegenmaßnahmen zu bestimmen und auszuführen. Die Behebung von Störungen in der Überwachung des Reifendrucks kann sich verzögern und es wurde erkannt, dass sich die Risiken einer mangelhaften Überwachung des Reifendrucks mit zunehmender Dauer des unüberwachten Zustands ins Unkalkulierbare steigern.

Es wurde erkannt, dass es insbesondere für Flotten umfassend mehrere Fahrzeuge wünschenswert ist, eine möglichst lückenlose Reifendrucküberwachung sicherzustellen. Ferner ist es erstrebenswert, Ursachen für Beeinträchtigungen von Reifendrucksensorsystemen nachverfolgen und auswerten zu können, sowie passgenaue Gegenmaßnahmen für Störungen bestimmen zu können. Nicht zuletzt wurde erkannt, dass bei Betrachtung vieler Reifendrucksensoren die hieraus entstehende umfassende Datenbasis wertvolle Einblicke in Störfälle liefern kann.

Eine Aufgabe der vorliegenden Erfindung ist es daher, Verfahren und Vorrichtungen zur Reifendrucksensorüberwachung bereitzustellen, welche eine besonders hohe Transparenz und Nachverfolgbarkeit erreicht, und ferner auch Einsichten in zugrundeliegende Ursachen für Beeinträchtigungen der Reifendrucküberwachung liefern.

Gemäß einem ersten beispielhaften Aspekt wird ein Verfahren zur Reifendrucksensorüberwachung eines bereiften Straßennutzfahrzeugs (z.B. ausgeführt und/oder gesteuert von einer Vorrichtung, welche auf dem bereiften Straßennutzfahrzeugs anordnenbar und/oder angeordnet ist) vorgeschlagen, umfassend
- Empfangen von Funksignalen von einem oder mehreren Reifendrucksensoren (z.B. zumindest 2, 3, 4, 5, 6, 7, 8, 10, 12, oder 14) des Straßennutzfahrzeugs,
- Detektieren (z.B. basierend auf einem Vergleich zwischen einem erwarteten Signal von dem Reifendrucksensor und/oder einer erwarteten Anzahl von Reifendrucksensoren mit tatsächlich empfangenen Signalen und/oder einer tatsächlich festgestellten Anzahl von Reifendrucksensoren)(z.B. basierend auf einer vordefinierten Zeitdauer) einer Funktionsstörung (z.B. Ausfall)(z.B. Fehlen an einem Fahrzeug) eines Reifendrucksensors (z.B. des einen oder der mehreren Reifendrucksensoren) (z.B. per Funk verbunden mit einer Vorrichtung, die das Verfahren nach dem ersten Aspekt ausführt und/oder steuert) basierend auf den empfangenen Funksignalen,
- basierend auf dem Detektieren (z.B. und/oder der detektierten Funktionsstörung), Abrufen (z.B. von Sensoren, z.B. satellitenbasierten Positionssensoren; z.B. aus einem Speicher einer Vorrichtung, die das Verfahren nach dem ersten Aspekt ausführt und/oder steuert; z.B. von anderen Reifendrucksensoren des Straßennutzfahrzeugs) von zumindest einem (z.B. für die Funktionsstörung des Reifendrucksensors spezifischer) Störungskontext des Straßennutzfahrzeugs (z.B. umfassend Zustandsinformationen des Reifendrucksensors, z.B. vor einer Funktionsstörung), und
- Übermitteln (z.B. über eine Kommunikationsschnittstelle, insbesondere ein Funkschnittstelle, insbesondere ein zelluläres Kommunikationsnetz) des abgerufenen Störungskontexts (z.B. indikativ für eine Störung, z.B. wirkt als Störungsindikation) an eine entfernte Vorrichtung (z.B. Server; z.B. welche das Verfahren nach dem zweiten Aspekt ausführt und/oder steuert).

Das Verfahren dient der Reifendrucksensorüberwachung eines bereiften Straßennutzfahrzeugs.

Das Straßennutzfahrzeug kann beispielsweise einen Lastkraftwagen, einen Anhänger oder einen Sattelauflieger umfassen und/oder diesem entsprechen.

Straßennutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Innenraum, insbesondere einem Laderaum, dienen. So sind beispielsweise Kofferaufbauten mit festen Seitenwänden und einem festen Dach bekannt, welche den Innenraum umschließen. Alternativ oder zusätzlich kann der Anhänger auch eine Außenwand aufweisen, welche zumindest teilweise eine Plane umfasst (Planenaufbauten).

Das Straßennutzfahrzeug kann einen Reifendrucksensor umfassen. Insbesondere kann das Straßennutzfahrzeug mehrere Reifendrucksensoren umfassen, welche an jeweils unterschiedlichen Reifen und/oder Rädern des Straßennutzfahrzeugs angebracht sind. Beispielsweise kann für das Straßennutzfahrzeug pro Rad ein Reifendrucksensor vorgesehen sein. Beispielsweise können zumindest, höchstens oder genau 4, 6, 8, 10, 12 oder 14 Reifendrucksensoren am Straßennutzfahrzeug vorgesehen sein. Ein jeweiliger Reifendrucksensor kann dazu eingerichtet sein, einen Innendrucks eines Reifens eines Rads des Straßennutzfahrzeugs zu erfassen. Ein Innenraum des Rads, welcher insbesondere von dem Reifen und der Felge begrenzt sein kann, ist mit einem Gas gefüllt, insbesondere Luft. Der Innenraum ist beispielsweise durch ein Ventil des Rads mit dem Gas befüllbar und/oder entleerbar. In dem Innenraum des Reifens besteht ein Innendruck. Bei Nutzfahrzeugen können höhere Innendrücke im Bereich 8-10 bar vorliegen.

Beispielsweise wird das Verfahren ausgeführt und/oder gesteuert von einer Vorrichtung, welche auf dem bereiften Straßennutzfahrzeugs anordnenbar und/oder angeordnet ist. Die Vorrichtung kann beispielsweise eine Steuerungseinrichtung sein, beispielsweise eine Telematikvorrichtung, welche dazu eingerichtet ist, eine Fernüberwachung des Straßennutzfahrzeugs bereitzustellen.

Das Verfahren umfasst ein Empfangen von Funksignalen von einem oder mehreren Reifendrucksensoren des Straßennutzfahrzeugs. Reifensensoren des Straßennutzfahrzeug sind beispielsweise per Funk verbunden mit einer Vorrichtung, die das Verfahren nach dem ersten Aspekt ausführt und/oder steuert.

Beispielsweise können Funksignale von zumindest 2, 3, 4, 5, 6, 7, 8, 10, 12, oder 14 Reifendrucksensoren des Straßennutzfahrzeugs empfangen werden. Die Funksignale sind insbesondere drahtlose Kommunikationssignale, welche über eine Luftschnittstelle empfangen werden. Die Funksignale können beispielsweise über einen drahtlosen Kommunikationsstandard wie ein Bluetooth (https://www.bluetooth.com), Zigbee, einem anderen Kommunikationsstandard, einer nicht standardisierten, beispielsweise proprietären Funkmethode, und/oder Kombinationen hieraus empfangen werden. Das Funksignal kann auf eine Trägerfrequenz aufmoduliert sein, beispielsweise einer Trägerfrequenz von einigen hundert MHz, beispielsweise 200 - 800 MHz, beispielsweise 433 MHz oder auch höhere Frequenzen von 2,4 bis 2,4835 GHz (z.B. Bluetooth).

Das Funksignal (z.B. eines jeweiligen Reifendrucksensors) kann beispielsweise periodisch empfangen werden, beispielsweise in regelmäßigen Intervallen, beispielsweise von zumindest oder höchstens 1s, 5s, 10s, 20s, 30s, 40s, 1min, 2min, 3min, 5min, 10min, 15min, oder 30min.

Das Verfahren umfasst ferner ein Detektieren einer Funktionsstörung eines Reifendrucksensors basierend auf den empfangenen Funksignalen.

Beispielsweise kann eine Funktionsstörung für einen jeweiligen des einen oder der mehreren Reifendrucksensoren des Straßennutzfahrzeugs detektiert werden. Beispielsweise können Funktionsstörungen von zumindest zwei, drei oder mehr Reifendrucksensoren detektiert werden.

Eine Funktionsstörung kann beispielsweise einen Ausfall des Reifendrucksensors umfassen und/oder ein Fehlen des Reifendrucksensors und/oder eine eingeschränkte Funktion des Reifendrucksensors.

Die Funktionsstörung kann beispielsweise detektiert werden basierend auf einem Vergleich zwischen einem erwarteten Funksignal (z.B. innerhalb eines erwarteten Sendeintervall; z.B. mit einer erwarteten Identifikation und/oder einem erwarteten Funktionsumfang) von dem Reifendrucksensor. Alternativ oder zusätzlich kann eine Funktionsstörung basierend auf einem Vergleich zwischen einer erwarteten Anzahl von Reifendrucksensoren mit einer tatsächlich anhand der empfangenen Funksignale bestimmten Anzahl detektiert werden.

Das Verfahren umfasst ferner ein Abrufen von zumindest einem Störungskontext des Straßennutzfahrzeugs.

Das Abrufen basiert auf dem Detektieren. Beispielsweise kann das Abrufen durch das Detektieren einer Funktionsstörung und/oder durch die detektierte Funktionsstörung ausgelöst werden.

Das Abrufen kann beispielsweise ein Auslesen von Sensoren umfassen, beispielsweise von (z.B. satellitenbasierten) Positionssensoren (z.B., eines von GPS, Galileo, Glonass, und/oder Beidou) und/oder Sensoren wie beispielsweise eines Temperatursensors, eines Zeitindikators (z.B. Uhr), und/oder Kombinationen hieraus. Das Abrufen kann beispielsweise alternativ oder zusätzlich ein Auslesen eines Speichers einer Vorrichtung umfassen, insbesondere einer Vorrichtung, welche die das Verfahren nach dem ersten Aspekt ausführt und/oder steuert oder von anderen Vorrichtungen, beispielsweise von Reifendrucksensoren (z.B., solchen ohne Funktionsstörung) des Straßennutzfahrzeugs.

Der Störungskontext kann beispielsweise für die Funktionsstörung des Reifendrucksensors spezifisch sein. Beispielsweise kann der Störungskontext Informationen über den gestörten Reifendrucksensor umfassen, beispielsweise eine Identifikation des Reifendrucksensors, ein von dem Reifendrucksensor empfangenes Fehlersignal (z.B. umfassend Fehlercodes, welche beispielsweise Rückschlüsse auf die Funktionsstörung zulassen), ein Alter des Reifendrucksensors, eine Einbauhistorie (z.B. Einbauort), einen Hersteller des Reifendrucksensors, eine oder mehrere Zustandsinformationen des Reifendrucksensors (z.B. von vor der Funktionsstörung) und/oder Kombinationen hieraus.

Ferner umfasst das Verfahren ein Übermitteln des abgerufenen Störungskontexts an eine entfernte Vorrichtung.

Das Übermitteln kann (bei allen offenbarten Aspekten; gleichermaßen ein Empfangen bei allen offenbarten Aspekten) beispielsweise über eine Kommunikationsschnittstelle durchgeführt werden (z.B. der Vorrichtung, welche das Verfahren gemäß dem ersten (bzw. dem jeweiligen) beispielhaften Aspekt steuert und/oder ausführt), beispielsweise eine Funkschnittstelle, insbesondere eine Funkschnittstelle eines zellulären Kommunikationsnetzes, beispielsweise gemäß einem Kommunikationsstandard gemäß 3GPP Spezifikationen, beispielsweise 2G, 3G, 4G, 5G, und/oder 6G.

Der Störungskontext kann beispielsweise indikativ für die Funktionsstörung des (z.B. eines oder mehrerer) Reifendrucksensors sein und/oder als Störungsindikation wirken. Ein Empfänger des Störungskontext kann somit basierend auf dem Störungskontext auf eine Funktionsstörung eines oder mehrerer Reifendrucksensoren des Straßennutzfahrzeugs schließen.

Der Störungskontext kann beispielsweise verschlüsselt versendet werden, beispielsweise mit einem öffentlichen Schlüssel eines asymmetrischen Schlüsselpaars aus einem öffentlichen und einem privaten Schlüssel. Beispielsweise wobei der zugehörige private Schlüssel der entfernten Vorrichtung zugehörig und/oder zugänglich ist und/oder von der entfernten Vorrichtung empfangen worden ist.

Die entfernte Vorrichtung kann beispielsweise einen Server umfassen. Beispielsweise kann die entfernte Vorrichtung das Verfahren nach dem zweiten Aspekt ausführen und/oder steuern.

Gemäß einem Ausführungsbeispiel des ersten beispielhaften Aspekts, wird vorgeschlagen, dass die Funksignale umfassen und/oder charakterisiert sind durch zumindest eines des folgenden
- eine Fehlermeldung (z.B. Fehlerkode, insbesondere Diagnostic Trouble Code, DTC)(z.B. Kabelfehler (z.B. Bond Wire Fault), Beschleunigungssensorfehler, Analog-Digital-Wandler Fehler, z.B. Overflow und/oder Underflow),
- einen Funktionsumfang (z.B. Umfang der gemessenen Größen oder Konfigurierbarkeit oder Konfigurationsanforderungen (z.B. Anlernen)) des Reifendrucksensors,
- eine Dauer seit einem letzten Empfangen von Funksignalen von dem Reifendrucksensor,
- ein (z.B. erwartetes) Sendeintervall des Reifendrucksensors,
- ein Herstellungsdatum des Reifendrucksensors,
- eine Betriebsdauer des Reifendrucksensors,
- eine Identifikation des Reifendrucksensors (z.B. Seriennummer)(z.B. neue, noch nicht zuvor registrierte Seriennummer, z.B. nach Ausbleiben von Funksignalen von einer zuvor registrierten Seriennummer), und/oder
- eine Messung des Reifendrucksensors, insbesondere ein Reifendruck, ein Drehwinkel, eine Drehfrequenz, eine Drehrichtung und/oder ein Batteriezustand (z.B. SoC, SoH).

Die Funksignale können eine Fehlermeldung umfassen. Eine Fehlermeldung kann beispielsweise einen Fehlerkode umfassen. Beispielsweise kann ein Fehlerkode einem Diagnostic Trouble Code, DTC, entsprechen und/oder diesen umfassen. Beispielsweise kann ein Fehlerkode einen Kabelfehler indizieren (z.B. Bond Wire Fault), einen Beschleunigungssensorfehler, einen Analog-Digital-Wandler Fehler (z.B. Overflow und/oder Underflow, und/oder Kombinationen hieraus.

Die Funksignale können alternativ oder zusätzlich eine Indikation eines Funktionsumfangs des Reifendrucksensors umfassen. Der Funktionsumfang kann beispielsweise einen Umfang (z.B. Anzahl verschiedener) gemessener Größen angeben und/oder eine Konfigurierbarkeit des Reifendrucksensors und/oder zumindest eine oder mehrere Konfigurationsanforderungen (z.B. ein notwendiges Anlernen) des Reifendrucksensors.

Aus den Funksignalen kann alternativ oder zusätzlich eine Dauer seit einem letzten Empfangen der Funksignale von dem Reifendrucksensor bestimmt werden. Beispielsweise kann das Verfahren ein Messen einer Zeit seit einem letzten Empfangen eines Funksignals von einem gegebenen Reifendrucksensor umfassen.

Aus den Funksignalen kann alternativ oder zusätzlich ein (z.B. erwartetes) Sendeintervall des Reifendrucksensors bestimmt werden. Ein (z.B. erwartetes) Sendeintervall kann beispielsweise aus einem Empfangen des Funksignals abgeleitet werden.

Die Funksignale können alternativ oder zusätzlich ein Herstellungsdatum des Reifendrucksensors umfassen und/oder indizieren, beispielsweise mittels einer aus den Funksignalen auslesbarer Seriennummer.

Die Funksignale können alternativ oder zusätzlich eine Betriebsdauer des Reifendrucksensors angeben.

Die Funksignale können alternativ oder zusätzlich eine Identifikation des Reifendrucksensors umfassen, insbesondere eine Seriennummer. Beispielsweise kann anhand der Identifikation bestimmt werden, von welchem Reifendrucksensor die Funksignale stammen. Beispielsweise kann eine neue, noch nicht zuvor registrierte Seriennummer, eine Neuinstallation eines Reifendrucksensors anzeigen. Beispielsweise können aus der Identifikation Rückschlüsse auf Eigenschaften des Reifendrucksensors geschlossen werden wie beispielsweise zumindest einiger der hierüber aufgeführten, beispielsweise ein Alter (z.B. Herstellungsdatum), ein Funktionsumfang, ein Hersteller und/oder Kombinationen hieraus bestimmt werden.

Die Funksignale können alternativ oder zusätzlich eine Messung des Reifendrucksensors, insbesondere einen Reifendruck, einen Drehwinkel, eine Drehfrequenz, eine Drehrichtung und/oder einen Batteriezustand (z.B. State of Charge, SoC, und/oder State of Health, SoH) umfassen und/oder indizieren.

Gemäß einem Ausführungsbeispiel des ersten beispielhaften Aspekts, wird vorgeschlagen, dass die Funktionsstörung zumindest einer der folgenden Kategorien angehört
- nicht-konforme Änderung der Fahrzeugausstattung, insbesondere
   - ein Fehlen (z.B. nach Reifenwechsel) des Reifendrucksensors,
   - ein eingeschränkter (z.B. bezogen auf einen erwarteten) Funktionsumfang des Reifendrucksensors, oder
   - ein ungeeigneter Typ des Reifendrucksensors (z.B. ungeeignet für eine Auswertungselektronik des Straßennutzfahrzeug, z.B. ungeeignet für eine Vorrichtung, die das Verfahren nach dem ersten Aspekt ausführt und/oder steuert) (z.B. anhand Seriennummer des Reifendrucksensors erkannt),
- Defekt (z.B. Ausfall, Batteriezustand) des Reifendrucksensors, oder
- Konfigurationsfehler des Reifendrucksensors (z.B. ausbleibende Anlernung).

Eine Funktionsstörung kann einer Kategorie angehören. Eine Kategorie einer Funktionsstörung kann insbesondere eine Ursache einer Fehlfunktion des Reifendrucksensors anzeigen. Beispielsweise kann eine Kategorie damit eine Art von Gegenmaßnahme indizieren, beispielsweise eine Nachrüstung eines Reifendrucksensors (z.B. bei nicht-existierendem Reifendrucksensor), ein (z.B. baldiger oder sofortiger) Tausch eines Reifendrucksensors (beispielsweise bei nicht konformem Reifendrucksensor, beispielsweise bei bekanntermaßen erhöhter Ungenauigkeit des detektierten Reifendrucksensors) und/oder ein Konfigurieren des aktuellen Reifendrucksensors (z.B. bei einem Konfigurationsfehler).

Die Kategorie der Funktionsstörung kann beispielsweise eine nicht-konforme Änderung der Fahrzeugausstattung umfassen. Derartige nicht-konforme Änderungen können beispielsweise ein Fehlen (z.B. nach einem Reifen- und/oder Radwechsel) des Reifendrucksensors, einen eingeschränkten (z.B. bezogen auf einen erwarteten) Funktionsumfang des Reifendrucksensors (z.B. nach einem Reifen- und/oder Radwechsel), und/oder einen ungeeigneten Typ des Reifendrucksensors umfassen. Ein Reifendrucksensor kann beispielsweise für eine Vorrichtung, welche das Verfahren ausführt und/oder steuert, ungeeignet sein, beispielsweise benötigte Größen nicht messen können, eine unzureichende Auflösung und/oder Genauigkeit aufweisen und/oder ein ungeeignetes Kommunikationsprotokoll für Funksignale und/oder eine ungeeignete (z.B. nicht dekodierbare) Kodierungsmethode für versendete Informationen verwenden.

Die Kategorie der Funktionsstörung kann beispielsweise alternativ oder zusätzlich einen Defekt (z.B. Ausfall, Batteriezustand) des Reifendrucksensors umfassen.

Die Kategorie der Funktionsstörung kann beispielsweise alternativ oder zusätzlich einen Konfigurationsfehler des Reifendrucksensors umfassen, beispielsweise eine ausbleibende Anlernung des Reifendrucksensors.

Gemäß einem Ausführungsbeispiel des ersten beispielhaften Aspekts, wird vorgeschlagen, dass der Störungskontext zumindest eines der folgenden umfasst
- zumindest ein Fahrzeugdatum (z.B. mit jeweiligem Zeitstempel), insbesondere
   - zumindest ein Betriebsdatum des Reifendrucksensors (z.B. und/oder weiterer Reifendrucksensoren des Straßennutzfahrzeugs), insbesondere ein Reifendruck, eine Reifentemperatur, eine Änderung einer Reifentemperatur, eine Änderung eines Reifendrucks, eine Beschleunigung, ein Sendeintervall, eine Batteriespannung, ein Batterieladezustand (z.B. State of Charge, SoC), eine Batteriegesundheit (z.B. State of Health, SoH), eine Anzahl von Reifendrucksensoren, Daten einer Umkonfigurierung, ein Produktionsdatum, und/oder eine Seriennummer,
   - zumindest eine Fehlermeldung (z.B. Diagnostic Trouble Codes, DTC) betreffend den Reifendrucksensor, insbesondere eine von dem Reifendrucksensor empfangene Fehlermeldung oder eine basierend auf den empfangenen Funksignalen bestimmte Fehlermeldung (z.B. basierend auf einem (z.B. anhaltendem) Abbruch einer Funkverbindung zu einem dem Straßennutzfahrzeug zugeordneten Reifendrucksensor),
   - zumindest ein Standortdatum, insbesondere ein Ort des Straßennutzfahrzeugs (z.B. Standortbezogene Trip-Daten, Plan- und Ist-Daten (Parken, Fahren)), und/oder
   - zumindest ein jeweiliger Zeitstempel zumindest einer Erfassung eines oder mehrerer Fahrzeugdaten,
- zumindest ein Stammdatum (z.B. maskiert durch Betreiber einer Fahrzeugflott umfassend das Straßennutzfahrzeug), insbesondere
   - ein Fertigungsdatum des Straßennutzfahrzeugs,
   - eine Typgenehmigung (z.B. mit Bezug zur Richtlinie R141) des Straßennutzfahrzeugs, und/oder
   - eine Fahrzeugausstattung des Straßennutzfahrzeugs, insbesondere Anzahl der Räder und/oder Reifendrucksensoren.

Der Störungskontext kann beispielsweise einen Datensatz von Informationen umfassen, welche beispielsweise zum Zeitpunkt der Detektion der Funktionsstörung und/oder vor dem Zeitpunkt der Detektion der Funktionsstörung erfasst und/oder abgerufen wurden und/oder werden. Der Störungskontext kann derart konfiguriert sein, dass er eine Zuordnung der Funktionsstörung zu einer Kategorie (z.B. einer der oben genannten Kategorien) zulässt. Hierzu kann der Störungskontext beispielsweise eine Indikation der Kategorie (z.B. einen Kategorie-Kode, z.B. ein Flag, eine Variable, einen Bit-String und/oder Kombinationen hieraus) umfassen. Beispielsweise kann hierfür das Verfahren eine Bestimmung einer Kategorie umfassen. Alternativ oder zusätzlich kann der Störungskontext Informationen umfassen, welche eine Kategorisierung (z.B. mittels eines Entscheidungsbaums und/oder eines trainierten Modells des maschinellen Lernens, beispielsweise basierend auf Daten anderer Reifendrucksensoren und/oder deren Fehlfunktionen) erlauben.

Der Störungskontext kann beispielsweise zumindest ein Fahrzeugdatum umfassen, beispielsweise mit einem jeweiligem Zeitstempel (z.B. Zeitpunkt der jeweiligen Erfassung des jeweiligen Fahrzeugdatums).

Das Fahrzeugdatum kann beispielsweise ein Betriebsdatum oder mehrere Betriebsdaten des Reifendrucksensors umfassen, beispielsweise des Reifendrucksensors dessen Funktionsstörung detektiert worden ist und/oder weiterer Reifendrucksensoren des Straßennutzfahrzeugs. Ein Betriebsdatum kann beispielsweise insbesondere ein Reifendruck, eine Reifentemperatur, eine Änderung einer Reifentemperatur, eine Änderung eines Reifendrucks, eine Beschleunigung, ein Sendeintervall, eine Batteriespannung, ein Batterieladezustand (z.B. State of Charge, SoC), eine Batteriegesundheit (z.B. State of Health, SoH), Daten einer Umkonfigurierung (z.B. Umkonfigurierungsdatum, durchführende Entität (z.B. Werkstatt) und/oder Konfigurationsmethode), ein Produktionsdatum, und/oder eine Seriennummer umfassen.

Das Fahrzeugdatum kann beispielsweise alternativ oder zusätzlich eine Anzahl von Reifendrucksensoren umfassen, beispielsweise eine vorgesehene oder eine tatsächliche (z.B. aktuelle) Anzahl von Reifendrucksensoren.

Der Störungskontext, insbesondere die Fahrzeugdaten, kann beispielsweise alternativ oder zusätzlich zumindest eine Fehlermeldung (z.B. Diagnostic Trouble Codes, DTC) betreffend den Reifendrucksensor umfassen. Die Fehlermeldung kann beispielsweise insbesondere eine von dem Reifendrucksensor empfangene Fehlermeldung oder eine basierend auf den empfangenen Funksignalen bestimmte Fehlermeldung umfassen. Beispielsweise kann eine aus den Funksignalen abgeleitete Fehlermeldung auf einem (z.B. anhaltendem, z.B. zumindest über einen vordefinierten Zeitraum, z.B. zumindest 10s, 20s, 30s, 40s, 1min, 2min, 5min, 10min, 15min, 20min, 30min, 1h, 2h, 3h, oder 4h) Abbruch (z.B. Zeit seit letztem empfangenen Funksignal) einer Funkverbindung zu einem dem Straßennutzfahrzeug zugeordneten Reifendrucksensor basieren.

Der Störungskontext, insbesondere die Fahrzeugdaten, kann beispielsweise alternativ oder zusätzlich ein Standortdatum umfassen, insbesondere einen Ort des Straßennutzfahrzeugs (z.B. standortbezogene Trip-Daten, z.B. indikativ für eine aktuelle und/oder geplante Route des Straßennutzfahrzeugs) und/oder Plan- und Ist-Zustände des Straßennutzfahrzeugs (Parken, Fahren)).

Der Störungskontext, insbesondere die Fahrzeugdaten, kann beispielsweise alternativ oder zusätzlich zumindest einen jeweiligen Zeitstempel zumindest einer Erfassung eines oder mehrerer Fahrzeugdaten (z.B. Betriebsdaten, Fehlermeldungen und/oder Standortdaten) umfassen.

Der Störungskontext kann beispielsweise alternativ oder zusätzlich Stammdaten des Straßennutzfahrzeugs umfassen (z.B. maskiert durch Betreiber einer Fahrzeugflott umfassend das Straßennutzfahrzeug).

Die Stammdaten können beispielsweise ein Fertigungsdatum des Straßennutzfahrzeugs umfassen, eine (z.B. Typ-)Genehmigung (z.B. mit Bezug zu einer Richtlinie UN ECE R141) des Straßennutzfahrzeugs, und/oder eine Fahrzeugausstattung des Straßennutzfahrzeugs, insbesondere eine Anzahl von Rädern und/oder Reifendrucksensoren. Stammdaten sind beispielsweise abrufbar aus einem Speicher einer Vorrichtung, welche das Verfahren nach dem ersten Aspekt ausführt oder steuert.

Gemäß einem Ausführungsbeispiel des ersten beispielhaften Aspekts, umfasst das Verfahren ferner
- Bestimmen der Kategorie (z.B. und/oder Ursache) der Funktionsstörung eines Reifendrucksensors des Straßennutzfahrzeug basierend auf den empfangenen Funksignalen und/oder dem Störungskontext.

Die Kategorie kann hierbei insbesondere eine der oben genannten sein, insbesondere eine nicht-konforme Änderung der Fahrzeugausstattung, ein Defekt oder ein Konfigurationsfehler.

Das Bestimmen der Kategorie basiert beispielsweise auf den empfangenen Funksignalen. Beispielsweise kann aus einem Ausbleiben von Funksignalen von einem Reifendrucksensor ein Defekt des Reifendrucksensors abgeleitet werden. Beispielsweise kann aus einem Inhalt von empfangenen Funksignalen (z.B. Seriennummer des Reifendrucksensors und/oder gemessene Größen, z.B. Plausibilität von gemessenen Größen (z.B. Drehgeschwindigkeit) basierend auf einem oder mehreren Vergleichen mit Messwerten anderer Reifendrucksensoren desselben Straßennutzfahrzeugs) ein ungeeigneter und/oder falsch konfigurierter Reifendrucksensor bestimmt werden.

Das Bestimmen der Kategorie basiert beispielsweise alternativ oder zusätzlich auf dem Störungskontext. Der Störungskontext kann die zu den Funksignalen hierüber genannten Informationen umfassen. Alternativ oder zusätzlich kann ferner beispielsweise ein Fahrzeugstammdatum, eine Historie (z.B. von Funksignalen und/oder Montage- und/oder Konfigurationsvorgängen des Reifendrucksensors), ein geplanter Austausch (z.B. von Sommer- auf Winterreifen oder umgekehrt) und/oder Kombinationen hieraus im Störungskontext enthalten und/oder davon indiziert sein.

Gemäß einem Ausführungsbeispiel des ersten beispielhaften Aspekts, umfasst das Verfahren ferner
- Detektieren eines Behebens einer Funktionsstörung (z.B. Anzahl Reifendrucksensoren wieder erwartungsgemäß, z.B. gemäß Stammdaten Fahrzeug), und
- Übermitteln einer Funktionsstörungsbehebungsindikation an die entfernte Vorrichtung.

Ein Detektieren eines Behebens einer Funktionsstörung kann beispielsweise anhand einer Anzahl von (z.B. korrekt konfigurierten und/oder funktionsfähigen) Reifendrucksensoren bestimmt werden. Beispielsweise kann die Anzahl von Reifendrucksensoren wieder erwartungsgemäß, z.B. gemäß Stammdaten des Fahrzeugs, sein, beispielsweise nach einer Phase, in der weniger als die erwartete Anzahl von Reifendrucksensoren (z.B. anhand von Funksignalen) detektiert worden sind. Die Reifendrucksensoren können hierbei anhand von eindeutigen Identifikationen (z.B. Seriennummern) gezählt werden.

Die Funktionsstörungsbehebungsindikation kann beispielsweise gleichartig zum Störungskontext an die entfernte Vorrichtung übermittelt werden (beispielsweise über ein zelluläres Kommunikationsnetz und/oder verschlüsselt). Beispielsweise kann die Funktionsstörungsbehebungsindikation die Kategorie der behobenen Funktionsstörung, eine Identifikation eines neu hinzugekommenen Reifendrucksensors und/oder einen Teile des Störungskontextes umfassen und/oder einen Störungskontext (z.B., genannt Störungsbehebungskontext), beispielsweise umfassend die gleichen Daten(-feldern) (z.B. mit anderen Werten und/oder Zeitstempeln als ein vorheriger Störungskontext) wie der Störungskontext und/oder erfasst zu einem Zeitpunkt, an dem das Beheben der Funktionsstöru8ng detektiert wird.

Merkmale, welche für den ersten Aspekt offenbart sind, sind gleichermaßen für alle übrigen Aspekte offenbart, soweit anwendbar.

Gemäß einem zweiten beispielhaften Aspekt wird ein Verfahren zur Überwachung eines oder mehrerer bereifter Straßennutzfahrzeuge (z.B. ausgeführt und/oder gesteuert von einem Server) vorgeschlagen, umfassend
- Empfangen eines (z.B. für eine Funktionsstörung eines Reifendrucksensors spezifischer) Störungskontexts von einem bereiften Straßennutzfahrzeug (z.B. von einer Vorrichtung, die das Verfahren nach dem ersten Aspekt ausführt und/oder steuert),
- Bestimmen einer Kategorie (z.B. und/oder Ursache) einer Funktionsstörung (z.B. Ausfall) eines Reifendrucksensors des Straßennutzfahrzeug basierend auf dem empfangenen Störungskontext (z.B. auch Ausbleiben von Funksignalen von einem Straßennutzfahrzeug, was auf Funktionsstörung (z.B. Ausfall) eines Empfängers für Signale von Reifendrucksensoren oder einer Telematik hindeuten kann), und
- Übermitteln eines Funktionsstörungssignals (z.B. indikativ für Funktionsstörung)(z.B. umfassend zumindest Teile des Störungskontexts) basierend auf der bestimmten Kategorie an eine entfernte Vorrichtung (z.B. Nutzerterminal; z.B. Vorrichtung, die das Verfahren nach dem dritten Aspekt ausführt und/oder steuert)(z.B. wobei das Funktionsstörungssignal die Kategorie angibt)(z.B. wobei das Funktionsstörungssignal eine Handlungsanweisung indiziert und/oder beinhaltet) (z.B. und/oder an das Straßennutzfahrzeug).

Da Verfahren gemäß dem zweiten beispielhaften Aspekt dient einer Überwachung eines oder mehrerer bereifter Straßennutzfahrzeuge, insbesondere zumindest eines oder mehrerer Reifendrucksensoren des einen oder der mehreren Straßennutzfahrzeuge.

Das Verfahren wird beispielsweise ausgeführt und/oder gesteuert von einer stationären Vorrichtung, insbesondere von einem oder mehreren Servern, welche auch als Backend-Vorrichtung bezeichnet werden kann. Die Vorrichtung kann beispielsweise mit dem Internet verbunden sein (z.B. über kabelgebundene und/oder kabellose Kommunikationsverbindungen) und zumindest einen oder mehrere Prozessoren und zumindest einen oder mehrere Speicher umfassen.

Das Verfahren umfasst ein Empfangen eines Störungskontexts von einem bereiften Straßennutzfahrzeug. Beispielsweise kann das Straßennutzfahrzeug eine Vorrichtung, die das Verfahren nach dem ersten beispielhaften Aspekt ausführt und/oder steuert, umfassen. Das Empfangen eines Störungskontexts kann beispielsweise zumindest teilweise über eine zelluläre Kommunikationsverbindung, z.B. gemäß einem 3GPP Standard erfolgen, z.B. 2G, 3G, 4G, 5G und/oder 6G. Das Empfangen kann beispielsweise gefolgt sein von einem Entschlüsseln des Störungskontext (z.B. basierend auf einem privaten Schlüssel) und/oder das Entschlüsseln umfassen.

Das Verfahren umfasst ferner ein Bestimmen einer Kategorie (z.B. und/oder Ursache) einer Funktionsstörung (z.B. Ausfall) eines Reifendrucksensors des Straßennutzfahrzeug. Das Bestimmen basiert auf dem empfangenen Störungskontext. Beispielsweise kann der Störungskontext die Kategorie indizieren und/oder enthalten. Beispielsweise kann hierbei eine Anomalie in Funksignalen von Reifendrucksensoren festgestellt werden (z.B. ein Ausbleiben von Funksignalen und/oder ein abnormaler Inhalt der Funksignale). Beispielsweise kann das Bestimmen auch auf einem Ausbleiben (z.B. Nicht-Empfangen) von Funksignalen von einem Straßennutzfahrzeug umfassen, was auf Funktionsstörung (z.B. Ausfall) eines Empfängers für Signale von Reifendrucksensoren oder einer Telematik hindeuten kann.

Beispielsweise kann eine Kategorie einer Funktionsstörung anhand einer Entscheidungsbaums vorgenommen werden. Beispielhaft sind im Folgenden einige Muster ausgeführt, welche jeweils auf eine der drei Kategorien hinweisen. Alternativ oder zusätzlich kann die Kategorie basierend auf einem (z.B. auf vergangenen Störungskontexten, z.B. in Kombination mit jeweiligen tatsächlichen Kategorien von Funktionsstörungen, basierend trainierten) Modell des maschinellen Lernens bestimmt werden.

Kategorie nicht-konforme Veränderung der Fahrzeugausstattung: (1) In einem vordefinierten Zeitraum (z.B. von zumindest oder höchstens 1min, 5min, 10 min, 15min, 20min, 30min, 45min oder 1h) nach einem vordefinierten Zeitpunkt (z.B. Beginn einer Fahrt (z.B. Trips)) wird (z.B. in Übereinstimmung mit der Norm UN ECE R141) bei ausbleibenden Funksignalen von einem oder mehreren Reifendrucksensoren eine Fehlermeldung darüber erzeugt, dass ein oder mehrere Reifendrucksensoren von einem Empfänger von Signalen der Reifendrucksensoren des Straßennutzfahrzeugs nicht mehr registriert werden. Der Empfänger stellt zusätzlich keine neuen, z.B. dem Straßennutzfahrzeug bislang nicht zugeordneten Reifendrucksensor-Identifikationen (z.B. in Empfangsnähe) fest. Der vordefinierte Zeitraum kann beispielsweise derart gewählt sein, dass darin ein Reifenwechsel möglich ist. Es wird somit die obige Kategorie von Funktionsstörung detektiert. Ferner kann eine Unterkategorie eines Radwechsels bestimmt werden, bei dem neu verbaute Räder keine Reifendrucksensoren umfassen. (2) Das Straßennutzfahrzeug beginnt eine neue Fahrt. Dem Straßennutzfahrzeug sind neue Reifendrucksensor-Identifikationen (z.B. Seriennummern) zugeordnet, die auf nicht (z.B. CoC-)kompatible Sensoren hindeuten. (3) Das Straßennutzfahrzeug beginnt eine neue Fahrt. Dem Straßennutzfahrzeug sind neue Reifendrucksensor-Seriennummern zugeordnet, die den Konventionen der (CoC-)kompatiblen Sensoren genügen. Jedoch werden in den Inhalten der übermittelten RDKS-Betriebsdaten erwartete Inhalte in Abweichung zu spezifizierten Datenprotokollen nicht gefüllt. (4) Das Fahrzeug beginnt einen neuen Trip. Der Empfänger registriert bekannte, dem Straßennutzfahrzeug zugeordnete Reifendrucksensoren (z.B. anhand von Seriennummern), z.B. in Empfangsreichweite. Einer oder mehr Sender übermitteln keine, oder unplausible Inhalte zu Messdaten, beispielsweise zu Drehwinkel, Drehfrequenz und Drehrichtung, ohne dass zeitgleich ein interner Sensorfehler gemeldet wird. Sowohl in Fall 2, 3 und 4 kann ein nicht kompatibles Fabrikat von Reifendrucksensor die Ursache sein.

Kategorie technischer Defekt des Reifendrucksensors: (1) Während eines laufenden Trips und in einem vordefinierten zeitlichen Abstand (z.B. von mehr als 10 min) seit einem vordefinierten Zeitpunkt (z.B. Beginn des Trips) registriert eine Empfangseinheit für Funksignale von Reifendrucksensoren einen Abbruch einer Verbindung zu zumindest einem oder mehreren der ihr zugeordneten Reifendrucksensoren. (2) Ein dem Fahrzeug zugeordneter Reifendrucksensor meldet selbstständig an die Reifendrucksensor-Empfangseinheit einen internen Fehler (z.B. Bond wire fault, acceleration sensor fault, ADC overflow/underflow fault). (3) Die Reifendrucksensor-Empfangseinheit meldet einen internen Fehler einer Komponente, die für die Funktion des Reifendrucküberwachungssystems erforderlich ist.

Kategorie Prozessfehler bei der Inbetriebnahme neuer Sensoren: In einem vordefinierten Zeitraum (z.B. 10 min) seit einem vordefinierten Zeitpunkt (z.B. Beginn des Trips) wird (z.B. Übereinstimmung mit der UN ECE R141 eine Fehlermeldung darüber erzeugt, dass ein oder mehrere Reifendrucksensoren vom Reifendrucksensor - Empfänger nicht mehr registriert werden. Der Empfänger stellt jedoch neue, dem Straßennutzfahrzeug bislang nicht zugeordnete Reifendrucksensor-Seriennummern in Empfangsnähe fest.

Beispielsweise können historische Reparaturdaten zur Bestimmung der Kategorie von Funktionsstörung herangezogen werden. Beispielsweise können nach Reparaturen sowohl die Störungskontexte (z.B. teilweise) sowie eine (z.B. bei Reparatur festgestellte) Kategorie der Funktionsstörung gemeinsam gespeichert werden. Beispielsweise können hierfür vergangene Herkünfte (z.B. Service-Partner, z.B. Werkstätten) Daten liefern, um die bei jeweiligen Interventionen (z.B. Reparaturen) dokumentierte (z.B. tatsächlich festgestellte) Ursachen für Reifendrucksensor-Funktionsstörungen in hier aufgeführte Kategorien einzuteilen und mit den im Vorfeld der jeweiligen Reparatur gesammelten Störungskontexten in Verbindung zu setzen. Hieraus kann sich ein (oder mehrere) Trainingsdatensatz ergeben, auf welchem basierend ein Modell (z.B. des Maschinellen Lernens, z.B. neuronales Netzwerk und/oder Support Vector Machine, SVM) trainiert werden kann. Das trainierte Modell kann beispielsweise eine Beziehung zwischen Störungskontext und Kategorie herstellen. Das Bestimmen einer Kategorie gemäß den vorliegenden Verfahren kann auf einem solchen trainierten Modell basieren. Basierend auf dem trainierten Modell kann ein gegebener Störungskontext als Input dienen und die Kategorie als Output erhalten werden. Daraus eröffnet sich die Möglichkeit das Modell zu trainieren und die Ergebnisqualität zu optimieren.

Das Verfahren umfasst ferner ein Übermitteln eines Funktionsstörungssignals basierend auf der bestimmten Kategorie an eine entfernte Vorrichtung. Die entfernte Vorrichtung kann hierbei beispielsweise eine entfernte Vorrichtung nach dem dritten beispielhaften Aspekt, z.B. ein Nutzerterminal. Alternativ oder zusätzlich kann das Funktionsstörungssignal an das Straßennutzfahrzeug übermittelt werden.

Beispielsweise kann das Funktionsstörungssignal insofern auf der Kategorie basieren, dass ein Empfänger für das Funktionsstörungssignal basierend auf der Kategorie ausgewählt wird. Alternativ oder zusätzlich kann ein Inhalt (z.B. Angabe der Kategorie) des Funktionsstörungssignals an die Kategorie angepasst werden.

Beispielsweise ist das Funktionsstörungssignal indikativ für die Funktionsstörung, insbesondere die Kategorie der Funktionsstörung. Beispielsweise umfasst das Funktionsstörungssignal alternativ oder zusätzlich zumindest Teile des empfangenen Störungskontexts oder den Störungskontext. Beispielsweise kann das Funktionsstörungssignal die Kategorie angeben.

Beispielsweise kann das Funktionsstörungssignal eine Gegenmaßnahme und/oder Handlungsanweisung indizieren und/oder beinhalten, beispielsweise einen Austausch, eine Neumontage und/oder ein Anlernen eines Reifendrucksensors.

Gemäß einem Ausführungsbeispiel des zweiten beispielhaften Aspekts, wird vorgeschlagen, dass die Funktionsstörung zumindest einer der folgenden Kategorien angehört
- nicht-konforme Änderung der Fahrzeugausstattung, insbesondere
   - ein Fehlen (z.B. nach Reifenwechsel) des Reifendrucksensors,
   - ein eingeschränkter (z.B. bezogen auf einen erwarteten) Funktionsumfang des Reifendrucksensors,
   - ein ungeeigneter Typ des Reifendrucksensors (z.B. ungeeignet für eine Auswertungselektronik des Straßennutzfahrzeug, z.B. ungeeignet für eine Vorrichtung, die das Verfahren nach dem ersten Aspekt ausführt und/oder steuert) (z.B. anhand Seriennummer des Reifendrucksensors erkannt),
- Defekt (z.B. Ausfall, Batteriezustand) des Reifendrucksensors, oder
- Konfigurationsfehler des Reifendrucksensors (z.B. ausbleibende Anlernung), oder
- ein Defekt (z.B. Ausfall) eines Empfängers für Signale von Reifendrucksensoren (z.B. erkannt an Ausbleiben von Signalen von Reifendrucksensoren seitens des Straßennutzfahrzeugs) oder einer Telematik des Straßennutzfahrzeugs (z.B. erkannt an vollständigem Ausbleiben von Signalen seitens des Straßennutzfahrzeugs).

Gemäß einem Ausführungsbeispiel des zweiten beispielhaften Aspekts, wird vorgeschlagen, dass der Störungskontext zumindest eines der folgenden umfasst
- zumindest ein Fahrzeugdatum (z.B. mit jeweiligem Zeitstempel), insbesondere
   - zumindest ein Betriebsdatum des Reifendrucksensors (z.B. und/oder weiterer Reifendrucksensoren des Straßennutzfahrzeugs), insbesondere ein Reifendruck, eine Reifentemperatur, eine Änderung einer Reifentemperatur, eine Änderung eines Reifendrucks, eine Beschleunigung, ein Sendeintervall, eine Batteriespannung, ein Batterieladezustand (z.B. State of Charge, SoC), eine Batteriegesundheit (z.B. State of Health, SoH), eine Anzahl von Reifendrucksensoren, Daten einer Umkonfigurierung, ein Produktionsdatum, und/oder eine Seriennummer,
   - zumindest eine Fehlermeldung (z.B. Diagnostic Trouble Codes, DTC) betreffend den Reifendrucksensor, insbesondere eine von dem Reifendrucksensor empfangene Fehlermeldung oder eine basierend auf den empfangenen Funksignalen bestimmte Fehlermeldung (z.B. basierend auf einem (z.B. anhaltendem) Abbruch einer Funkverbindung zu einem dem Straßennutzfahrzeug zugeordneten Reifendrucksensor),
   - zumindest ein Standortdatum, insbesondere ein Ort des Straßennutzfahrzeugs (z.B. Standortbezogene Trip-Daten, Plan- und Ist-Daten (Parken, Fahren)), und/oder
   - zumindest ein jeweiliger Zeitstempel zumindest einer Erfassung eines oder mehrerer Fahrzeugdaten,
- zumindest ein Stammdatum (z.B. maskiert durch Betreiber einer Fahrzeugflott umfassend das Straßennutzfahrzeug), insbesondere
   - ein Fertigungsdatum des Straßennutzfahrzeugs,
   - eine Typgenehmigung (z.B. mit Bezug zur Richtlinie R141) des Straßennutzfahrzeugs, und/oder
- eine Fahrzeugausstattung des Straßennutzfahrzeugs, insbesondere Anzahl der Räder und/oder Reifendrucksensoren.

Gemäß einem Ausführungsbeispiel des zweiten beispielhaften Aspekts, wird vorgeschlagen, dass das Verfahren ferner umfasst Bestimmen, basierend auf dem empfangenen Störungskontext, zumindest eines der folgenden
- eine Fahrzeugidentifikation (z.B. und Kundenorganisation, z.B. und/oder eine maskierte Repräsentation von Fahrzeugidentifikation und/oder Kundenorganisation) des Straßennutzfahrzeugs,
- eine mit einer Funktionsstörung des Reifendrucksensors assoziierte Position des Straßennutzfahrzeugs (z.B. letzte (Park-)Position vor der Funktionsstörung),
- ein Zeitstempel (z.B. Datum und/oder Uhrzeit) (z.B. umfassend Beginn, Ende und/oder Dauer) eines mit einer Funktionsstörung des Reifendrucksensors assoziierten Vorgangs (z.B. eine Funktionsstörung zugeordneter Parkvorgang).

Der Störungskontext kann zahlreiche Informationen über das Straßennutzfahrzeug und/oder die Funktionsstörung des Reifendrucksensors umfassen. Hieraus können besonders relevante Größen extrahiert werden, beispielsweise zumindest eins oder mehr der folgenden.

Aus dem Störungskontext kann beispielsweise eine Fahrzeugidentifikation bestimmt werden. Ferner kann beispielsweise eine dem Straßennutzfahrzeug zugeordnete Kundenorganisation zugeordnet werden. Auch dann aus dem Störungskontext z.B. eine maskierte Repräsentation von bestimmten Informationen, insbesondere von Fahrzeugidentifikation und/oder Kundenorganisation, des Straßennutzfahrzeugs bestimmt werden, welche beispielsweise anonymisiert und/oder für die Weitergabe an Dritte (z.B. Werkstätten) vorbereitet ist.

Auch kann alternativ oder zusätzlich aus dem Störungskontext beispielsweise eine mit einer Funktionsstörung des Reifendrucksensors assoziierte Position des Straßennutzfahrzeugs bestimmt werden, beispielsweise eine (z.B. letzte) (Park-)Position, z.B. vor oder während Eintritt der Funktionsstörung.

Auch kann alternativ oder zusätzlich aus dem Störungskontext beispielsweise ein Zeitstempel eines mit einer Funktionsstörung des Reifendrucksensors assoziierten Vorgangs (z.B. einer Funktionsstörung zugeordneter Parkvorgang) bestimmt werden. Ein Zeitstempel kann beispielsweise ein Datum und/oder Uhrzeit umfassen und/oder angeben, beispielsweise umfassend zumindest eine oder mehrere von Beginn, Ende und/oder Dauer eines zugeordneten Vorgangs.

Gemäß einem Ausführungsbeispiel des zweiten beispielhaften Aspekts, wird vorgeschlagen, dass das Funktionsstörungssignal zumindest eines der folgenden umfasst
- eine (z.B. die bestimmte) Fahrzeugidentifikation des Straßennutzfahrzeugs,
- eine (z.B. die bestimmte) Position des Straßennutzfahrzeugs (z.B. aktuell und/oder zum Zeitpunkt der Funktionsstörung),
- ein (z.B. der bestimmte) Zeitstempel der Funktionsstörung (z.B. Datum und Uhrzeit),
- eine (z.B. geplante) Route des Straßennutzfahrzeugs, und/oder
- die Kategorie (z.B. Ursache) der Funktionsstörung.

Das Funktionsstörungssignal kann beispielsweise den Störungskontext komplett oder teilweise im Funktionsstörungssignal übermitteln. Alternativ oder zusätzlich kann zumindest eine der obigen Größen aus dem Funktionsstörungssignal bestimmt werden und sodann als Teil des Funktionsstörungssignals übermittelt werden.

Gemäß einem Ausführungsbeispiel des zweiten beispielhaften Aspekts, wird vorgeschlagen, dass das Verfahren ferner umfasst
- Auslösen einer Gegenmaßnahme gegen die Funktionsstörung (z.B. Nutzerinteraktion, beispielsweise Hinweis, beispielsweise Anzeige Karte (z.B. mit Bewertungen von zukünftigen und/oder vergangenen Herkünften); z.B. automatisierte Gegenmaßnahme, wie automatische Routenführung zu Werkstatt oder Stilllegung Fahrzeug) basierend auf der bestimmten Kategorie der Funktionsstörung.

Das Verfahren kann ferner ein Auslösen einer Gegenmaßnahme gegen die Funktionsstörung umfassen. Die Gegenmaßnahme kann basierend auf der bestimmten Kategorie der Funktionsstörung ausgelöst werden.

Beispielsweise kann die Gegenmaßnahme eine Nutzerinteraktion umfassen, beispielsweise einen Hinweis, welcher einem Nutzer präsentiert wird. Ein Nutzer, welcher von der Nutzeraktion angesprochen ist, ist hierbei beispielsweise ein Führer des Straßennutzfahrzeuges und/oder ein Operator einer Fahrzeugflotte, welcher beispielsweise mit einer Vorrichtung, welche ein Verfahren gemäß dem dritten beispielhaften Aspekt ausführt und/oder steuert, interagiert. In beiden Fällen ist der Nutzer ein für seine Aufgabe trainierter Facharbeiter, welcher reproduzierbar auf eine Nutzerinteraktion reagiert und Folgeschritte einleitet, die auf eine Auflösung der Funktionsstörung hinwirken. Eine Nutzerinteraktion kann beispielsweise eine Anzeige einer Karte (z.B. umfassend Bewertungen von zukünftigen und/oder vergangenen Herkünften, z.B. Werkstätten) umfassen.

Eine Gegenmaßnahme kann alternativ oder zusätzlich beispielsweise eine automatische Routenführung umfassen, beispielsweise zu einer zukünftigen Herkunft (z.B. Werkstatt), eine Terminvereinbarung mit einer zukünftigen Herkunft, eine Übermittlung von Diagnosedaten (z.B. Teile es Störungskontext, beispielsweise maskiert) und/oder eine Übermittlung eines Reparaturauftrags an die zukünftige Herkunft (z.B. basierend auf der Kategorie).

Eine Gegenmaßnahme kann alternativ oder zusätzlich beispielsweise eine (z.B. temporäre) Stilllegung des Fahrzeugs umfassen.

Gemäß einem Ausführungsbeispiel des zweiten beispielhaften Aspekts, wird vorgeschlagen, dass das Verfahren ferner umfasst
- Abrufen historischer Installationsdaten (z.B. wobei die historischen Installationsdaten durch die Vorrichtung, die das Verfahren nach dem zweiten Aspekt ausführt und/oder steuert, aufgezeichnet und gespeichert wurden) zu einer vergangenen Herkunft (z.B. Hersteller oder Reparaturstätte) des Reifendrucksensors (z.B. Einbauwerkstatt, Einbaudatum, Einbauort), und
- Bestimmen einer Bewertung der vergangenen Herkunft zumindest teilweise basierend auf der bestimmten Kategorie der Funktionsstörung.

Das Verfahren kann beispielsweise ein Abrufen historischer Installationsdaten zu einer vergangenen Herkunft (z.B. einem Hersteller und/oder einer Werkstatt und/oder Reparaturstätte) des Reifendrucksensors umfassen.

Beispielsweise können die historischen Installationsdaten durch die Vorrichtung, die das Verfahren nach dem zweiten Aspekt ausführt und/oder steuert, (z.B. kontinuierlich) aufgezeichnet (z.B. empfangen von Straßennutzfahrzeugen, z.B. umfassend das Straßennutzfahrzeug) und gespeichert wurden.

Beispielsweise können die historischen Installationsdaten von Straßennutzfahrzeugen empfangen worden sein. Insbesondere können die historischen Installationsdaten zumindest teilweise auf vergangenen von Straßennutzfahrzeugen empfangenen Störungskontexten (z.B. welche jeweilige vergangene Herkünfte indizieren, beispielsweise gemeinsam mit einer assoziierten Funktionsstörung (z.B. Kategorie) und/oder einer Betriebsdauer bis zu einer Funktionsstörung) basieren.

Ferner kann das Verfahren ein Bestimmen einer Bewertung der vergangenen Herkunft zumindest teilweise basierend auf der bestimmten Kategorie der Funktionsstörung umfassen. Beispielsweise kann eine vergangene Herkunft, welche ungeeignete Reifendrucksensoren (z.B. inkompatibel mit (z.B. Vorrichtungen) des Straßennutzfahrzeugs) und/oder nicht angelernte oder fehlerhaft montierte Reifendrucksensoren und/oder als fehleranfällig (z.B. und günstige) bekannte Reifendrucksensoren verbaut, eine schlechtere Bewertung erhalten als eine vergangene Herkunft, welche kompatible, korrekt konfigurierte und langlebige Reifendrucksensoren verbaut.

Die Bewertung kann beispielsweise für spezifisch für eine Kategorie von Funktionsstörung sein, z.B. als eine jeweilige (z.B. unabhängige) Bewertung für eine jeweilige Kategorie. Beispielsweise kann hierauf basierend für eine gegebene Kategorie eine entsprechende Bewertung für diese Kategorie betrachtet werden, wenn eine zukünftige Herkunft bestimmt wird, während Bewertungen anderer Kategorien weniger gewichtet oder ignoriert werden.

Gemäß einem Ausführungsbeispiel des zweiten beispielhaften Aspekts, wird vorgeschlagen, dass das Verfahren ferner umfasst
- Übermitteln der bestimmten Bewertung an die entfernte Vorrichtung.

Beispielsweise kann die entfernte Vorrichtung allein schon dadurch einen technischen Vorteil erlangen, dass eine auf historischen Daten (z.B. Störungskontexten) basierende Bewertung empfangen wird. Beispielsweise kann die Bewertung genutzt werden, um (z.B. zumindest teil-)automatisiert eine Auswahl von zukünftigen Herkünften zu unterstützen (z.B. als Vorschlag und/oder als angezeigte Bewertung) oder (z.B. vollautomatisch) vorzunehmen.

Die Bewertung kann alternativ oder zusätzlich an das Straßennutzfahrzeug übermittelt werden.

Bewertungen können für eine oder mehrere vergangene und/oder zukünftige Herkünfte übermittelt werden.

Gemäß einem Ausführungsbeispiel des zweiten beispielhaften Aspekts, wird vorgeschlagen, dass das Verfahren ferner umfasst
- Bestimmung von zumindest einer zukünftigen Herkunft (z.B. Hersteller oder Reparaturstätte) (z.B. basierend auf einem aktuellen Ort des Straßennutzfahrzeuges und/oder auf einer geplanten Route) basierend auf dem empfangenen Störungskontext (z.B. Position oder Hersteller des Fahrzeugs und/oder des Reifendrucksensors) und/oder der bestimmten Kategorie und/oder einer (z.B. der) bestimmten Bewertung einer vergangenen Herkunft, und
- Übermitteln (z.B. gemeinsam mit dem oder als Teil des Funktionsstörungssignals) einer Indikation der bestimmten zukünftigen Herkunft an die entfernte Vorrichtung (z.B. und/oder an das Straßennutzfahrzeug, z.B. via die entfernte Vorrichtung).

Das Verfahren kann beispielsweise eine Bestimmung von zumindest einer zukünftigen Herkunft basierend auf dem empfangenen Störungskontext und/oder der bestimmten Kategorie und/oder einer (z.B. der) bestimmten Bewertung einer vergangenen Herkunft umfassen. Beispielsweise können vergangene Herkünfte mit vergleichsweise (z.B. zu anderen vergangenen Herkünften) guter Bewertung als zukünftige Herkunft ausgewählt werden.

Beispielsweise kann zusätzlich aus dem empfangenen Störungskontext eine Position oder ein Hersteller des Straßennutzfahrzeugs und/oder des Reifendrucksensors bestimmt werden. Hierauf basierend kann eine zukünftige Herkunft bestimmt werden, beispielsweise basierend auf einer entsprechenden Kompetenz (z.B. Vertragswerkstatt für Hersteller) und/oder basierend auf einer Distanz und/oder Fahrzeit zu der zukünftigen Herkunft (z.B. gemessen als Abweichung von einer geplanten Route, welche z.B. ebenfalls aus dem Störungskontext bestimmt werden kann).

Das Verfahren kann ferner ein Übermitteln einer Indikation der bestimmten zukünftigen Herkunft an die entfernte Vorrichtung und/oder an das Straßennutzfahrzeug (z.B. via die entfernte Vorrichtung) umfassen. Das Übermitteln kann beispielsweise gemeinsam mit dem oder als Teil des Funktionsstörungssignals erfolgen. Beispielsweise kann die bestimmte zukünftigen Herkunft mittels eines Orts (z.B. Koordinaten) und/oder einer Identifikation (z.B. Name, Adresse, Identifikationsnummer und/oder Kombinationen hieraus) bestimmt werden.

Gemäß einem Ausführungsbeispiel des zweiten beispielhaften Aspekts, wird vorgeschlagen, dass das Verfahren ferner umfasst (beispielsweise als Teil einer Gegenmaßnahme)
- Übermitteln zumindest von Teilen des Störungskontexts und/oder der bestimmten Kategorie an die bestimmte zukünftige Herkunft (z.B. Reparaturstätte) und/oder
- Abfragen eines Termins zur Behebung der Funktionsstörung bei der bestimmten zukünftigen Herkunft, insbesondere basierend auf einer Position des Straßennutzfahrzeugs und/oder einer vorausgesagten Ankunftszeit des Straßennutzfahrzeugs bei der bestimmten zukünftigen Herkunft.

Es kann technisch vorteilhaft sein, Diagnoseinformationen an eine zukünftige Herkunft (z.B. Werkstatt) zu übermitteln, um eine Vor-Ort-Untersuchung und/oder Komponentenauswahl zu verkürzen und/oder eine erfolgreiche Intervention (z.B. Reifendrucksensortausch) zu begünstigen.

Das Verfahren kann deshalb beispielsweise ein Übermitteln zumindest von Teilen des Störungskontexts und/oder der bestimmten Kategorie der Funktionsstörung oder weiterer bestimmter Größen an die bestimmte zukünftige Herkunft (z.B. Reparaturstätte) umfassen. Insbesondere können derartige Daten einen Typ des Fahrzeugs und/oder Rads und/oder (z.B. benötigten) Reifendrucksensors umfassen. Hierauf basierend kann die zukünftige Herkunft Vorbereitungen für eine schnelle und erfolgreiche Behebung treffen.

Ferner kann das Verfahren ein Abfragen eines Termins zur Behebung der Funktionsstörung bei der bestimmten zukünftigen Herkunft umfassen. Beispielsweise kann das Abfragen und/oder eine Auswahl des Termins (z.B. eines Zeitfensters für in Frage kommende Termine) basieren auf einer Position des Straßennutzfahrzeugs, einer geplanten Route des Straßennutzfahrzeugs (z.B. umfassend Stopps), einer aktuellen Zeit (z.B. Wochentag und/oder Tageszeit) und/oder der Kategorie der Funktionsstörung. Alternativ oder zusätzlich kann das Abfragen und/oder eine Auswahl des Termins basieren auf einer vorausgesagten Ankunftszeit des Straßennutzfahrzeugs bei der bestimmten zukünftigen Herkunft.

Gemäß einem Ausführungsbeispiel des zweiten beispielhaften Aspekts, wird vorgeschlagen, dass das Funktionsstörungssignals dazu konfiguriert ist, eine Gegenmaßnahme gegen die Funktionsstörung (z.B. bei der entfernten Vorrichtung und/oder dem Straßennutzfahrzeug) auszulösen, insbesondere
- zumindest eine Nutzerinteraktion (z.B. Hinweis an Flottenmanager, beispielsweise Anzeige Karte von zukünftigen Herkünften (z.B. mit Bewertungen von zukünftigen Herkünften))
- eine Auslösung einer Routenführung zu der zukünftigen Herkunft (z.B. wobei das Funktionsstörungssignal an das Straßennutzfahrzeug übermittelt wird, z.B. direkt oder via die entfernte Vorrichtung), oder
- eine Stilllegung des Straßennutzfahrzeugs.

Das Funktionsstörungssignals kann beispielsweise als Befehl an die entfernte Vorrichtung und/oder eine Vorrichtung, welche das Verfahren gemäß dem ersten beispielhaften Aspekt ausführt und/oder steuert, ausgebildet sein.

Merkmale, welche für den zweiten Aspekt offenbart sind, sind gleichermaßen für alle übrigen Aspekte offenbart, soweit anwendbar.

Gemäß einem dritten beispielhaften Aspekt wird ein Verfahren zur Überwachung eines oder mehrerer bereifter Straßennutzfahrzeuge (z.B. ausgeführt und/oder gesteuert von einem Endgerät, z.B. einem Computer, Laptop und/oder Smartphone) vorgeschlagen, umfassend
- Empfangen eines Funktionsstörungssignals von einer entfernten Vorrichtung (z.B. Vorrichtung, die das Verfahren nach dem zweiten Aspekt ausführt und/oder steuert),
- Bestimmen einer Kategorie einer Funktionsstörung (z.B. Ausfall) eines Reifendrucksensors eines Straßennutzfahrzeugs basierend auf dem empfangenen Funktionsstörungssignal, und
- Auslösen einer Gegenmaßnahme gegen die Funktionsstörung (z.B. Nutzerinteraktion, beispielsweise Hinweis, beispielsweise Anzeige Karte (z.B. mit Bewertungen von zukünftigen und/oder vergangenen Herkünften); z.B. automatisierte Gegenmaßnahme, wie automatische Routenführung zu Werkstatt oder Stilllegung Fahrzeug) basierend auf der bestimmten Kategorie der Funktionsstörung.

Das Verfahren gemäß dem dritten beispielhaften Aspekt dient einer Überwachung eines oder mehrerer bereifter Straßennutzfahrzeuge, beispielsweise in Kombination mit dem Verfahren gemäß dem zweiten und/oder ersten Aspekt.

Das Verfahren gemäß dem dritten beispielhaften Aspekt wird beispielsweise ausgeführt und/oder gesteuert von einem Endgerät, z.B. einem Computer, Laptop und/oder Smartphone.

Das Bestimmen der Kategorie kann beispielsweise als Auslesen der Kategorie aus dem Funktionsstörungssignal realisiert werden. Beispielsweise kann die Kategorie auch aus Daten, welche im Funktionsstörungssignal enthalten sind, abgeleitet werden.

Die Gegenmaßnahme kann beispielsweise automatisiert oder teilautomatisiert ausgelöst werden. Beispielsweise kann einem Benutzer eine Auswahl von Optionen für Gegenmaßnahmen angezeigt werden, welcher eine Option auswählt.

Gemäß einem Ausführungsbeispiel des dritten beispielhaften Aspekts, wird vorgeschlagen, dass die Funktionsstörung zumindest einer der folgenden Kategorien angehört
- nicht-konforme Änderung der Fahrzeugausstattung, insbesondere
   - ein Fehlen (z.B. nach Reifenwechsel) des Reifendrucksensors,
   - ein eingeschränkter (z.B. bezogen auf einen erwarteten) Funktionsumfang des Reifendrucksensors,
   - ein ungeeigneter Typ des Reifendrucksensors (z.B. ungeeignet für eine Auswertungselektronik des Straßennutzfahrzeug, z.B. ungeeignet für eine Vorrichtung, die das Verfahren nach dem ersten Aspekt ausführt und/oder steuert) (z.B. anhand Seriennummer des Reifendrucksensors erkannt),
- Defekt (z.B. Ausfall, Batteriezustand) des Reifendrucksensors, oder
- Konfigurationsfehler des Reifendrucksensors (z.B. ausbleibende Anlernung).

Gemäß einem Ausführungsbeispiel des dritten beispielhaften Aspekts, wird vorgeschlagen, dass das Funktionsstörungssignal zumindest eines der folgenden umfasst
- eine (z.B. nach dem Verfahren gemäß dem zweiten beispielhaften Aspekt bestimmte) Fahrzeugidentifikation des Straßennutzfahrzeugs,
- eine (z.B. nach dem Verfahren gemäß dem zweiten beispielhaften Aspekt bestimmte) Position des Straßennutzfahrzeugs (z.B. aktuell und/oder zum Zeitpunkt der Funktionsstörung),
- ein (z.B. nach dem Verfahren gemäß dem zweiten beispielhaften Aspekt bestimmte) Zeitstempel der Funktionsstörung (z.B. Datum und Uhrzeit),
- eine (z.B. geplante) Route des Straßennutzfahrzeugs, und/oder
- die Kategorie (z.B. Ursache) der Funktionsstörung.

Gemäß einem Ausführungsbeispiel des dritten beispielhaften Aspekts, wird vorgeschlagen, dass das Verfahren ferner umfasst
- Empfangen (z.B. gemeinsam mit dem oder als Teil des Funktionsstörungssignals) einer Indikation der bestimmten zukünftigen Herkunft von der entfernten Vorrichtung und/oder
- Empfangen einer Bewertung einer vergangenen Herkunft von einer entfernten Vorrichtung (z.B. gemäß dem zweiten Aspekt) (z.B. und ferner Anzeigen, z.B. auf einer Karte von einer oder mehrerer zukünftigen Herkünften basierend auf der bestimmten Bewertung (z.B. mit Bewertungsindikation (z.B. farbkodiert oder mit Hinweiselement (z.B. Sternen) markiert) oder ausgeblendet bei zu schlechter Bewertung)).

Beispielsweise kann eine zukünftige Herkunft vorausgewählt sein von der entfernten Vorrichtung und lediglich zu Informationenzwecken angezeigt werden. Auch kann eine Auswahl von zukünftigen Herkünften angezeigt werden.

Beispielsweise kann eine Bewertung empfangen und angezeigt werden, sodass ein Nutzer eine informierte Auswahl einer zukünftigen Herkunft treffen kann.

Merkmale, welche für den dritten Aspekt offenbart sind, sind gleichermaßen für alle übrigen Aspekte offenbart, soweit anwendbar.

Gemäß einem vierten beispielhaften Aspekt wird eine Vorrichtung zur Reifendrucküberwachung eines bereiften Straßennutzfahrzeugs, umfassend Mittel zur Ausführung und/oder Steuerung des Verfahrens nach dem ersten beispielhaften Aspekt vorgeschlagen. Beispielsweise umfasst die Vorrichtung zumindest eine Kommunikationseinrichtung, beispielsweise um mit einem Empfänger von Signalen von Reifendrucksensoren zu kommunizieren und/oder um Funksignale von Reifendrucksensoren zu empfangen. Auch kann beispielsweise eine weitere (z.B. und oder dieselbe) Kommunikationsvorrichtung zum Übermitteln des Störungskontexts an die entfernte Vorrichtung vorgesehen sein. Die Vorrichtung gemäß dem vierten Aspekt kann beispielsweise auf einem Straßennutzfahrzeug anordnenbar sein. Beispielsweise kann die Vorrichtung zumindest einen Prozessor und/oder zumindest einen Speicher umfassen, beispielsweise wobei in einem Teil des Speichers Programmcode gespeichert ist, welcher dazu führt, dass die Vorrichtung das Verfahren gemäß dem zweiten beispielhaften Aspekt ausführt und/oder steuert.

Gemäß einem fünften beispielhaften Aspekt wird ein bereiftes Straßennutzfahrzeug umfassend eine Vorrichtung dem vierten Aspekt vorgeschlagen.

Gemäß einem sechsten beispielhaften Aspekt wird eine Vorrichtung zur Überwachung eines oder mehrerer bereifter Straßennutzfahrzeuge vorgeschlagen, umfassend Mittel zur Ausführung und/oder Steuerung des Verfahrens gemäß dem zweiten beispielhaften Aspekt. Die Vorrichtung einem sechsten beispielhaften Aspekt kann eine Kommunikationsvorrichtung umfassen, welche dazu eingerichtet ist, den Störungskontext zu empfangen und/oder das Störungssignal zu übermitteln. Beispielsweise kann die Vorrichtung zumindest einen Prozessor und/oder zumindest einen Speicher umfassen, beispielsweise wobei in einem Teil des Speichers Programmcode gespeichert ist, welcher dazu führt, dass die Vorrichtung das Verfahren gemäß dem zweiten beispielhaften Aspekt ausführt und/oder steuert.

Gemäß einem weiteren beispielhaften Aspekt wird ein System umfassend eine Vorrichtung dem sechsten Aspekt und zumindest eines von einer Vorrichtung gemäß dem vierten beispielhaften Aspekt oder ein Straßennutzfahrzeug gemäß dem fünften beispielhaften Aspekt vorgeschlagen.

Gemäß einem siebten beispielhaften Aspekt wird eine Vorrichtung zur Überwachung eines oder mehrerer bereifter Straßennutzfahrzeuge vorgeschlagen, umfassend Mittel zur Ausführung und/oder Steuerung des Verfahrens nach dem dritten beispielhaften Aspekt. Die Vorrichtung umfasst eine Kommunikationsvorrichtung und einen Prozessor sowie Speicher, um das Verfahren gemäß dem dritten Aspekt auszuführen und/oder zu steuern.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs jedoch als notwendiger Bestandteil der vorliegenden Erfindung erachtet werden.

Es zeigen:
- Fig. 1: eine schematische Darstellung einer beispielhaften Ausführungsform eines Straßennutzfahrzeugs gemäß der Erfindung;
- Fig. 2: eine schematische Darstellung einer beispielhaften Ausführungsform eines Systems gemäß der Erfindung;
- Fig. 3: eine schematische Darstellung einer beispielhaften Ausführungsform der Erfindung;
- Fig. 4a,b: schematische Darstellungen von Funktionsstörungen von Reifendrucksensoren gemäß beispielhaften Ausführungsform der Erfindung;
- Fig. 5: eine schematische Darstellung einer beispielhaften Ausführungsform eines Systems gemäß der Erfindung;
- Fig. 6: ein Flussdiagramm gemäß einer beispielhaften Ausführungsform des ersten Aspekts der Erfindung;
- Fig. 7: ein Flussdiagramm gemäß einer beispielhaften Ausführungsform des zweiten Aspekts der Erfindung;
- Fig. 8: ein Flussdiagramm gemäß einer beispielhaften Ausführungsform des dritten Aspekts der Erfindung;

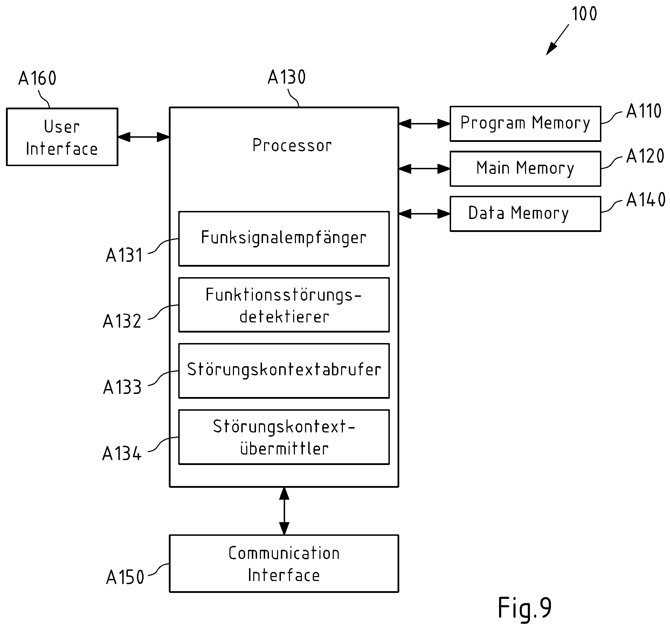

- Fig. 9: ein Blockdiagramm gemäß einer beispielhaften Ausführungsform des vierten Aspekts der Erfindung;
- Fig. 10: ein Blockdiagramm gemäß einer beispielhaften Ausführungsform des sechsten Aspekts der Erfindung;
- Fig. 11: ein Blockdiagramm gemäß einer beispielhaften Ausführungsform des siebten Aspekts der Erfindung;
- Fig. 12: beispielhafte Speichermedien.

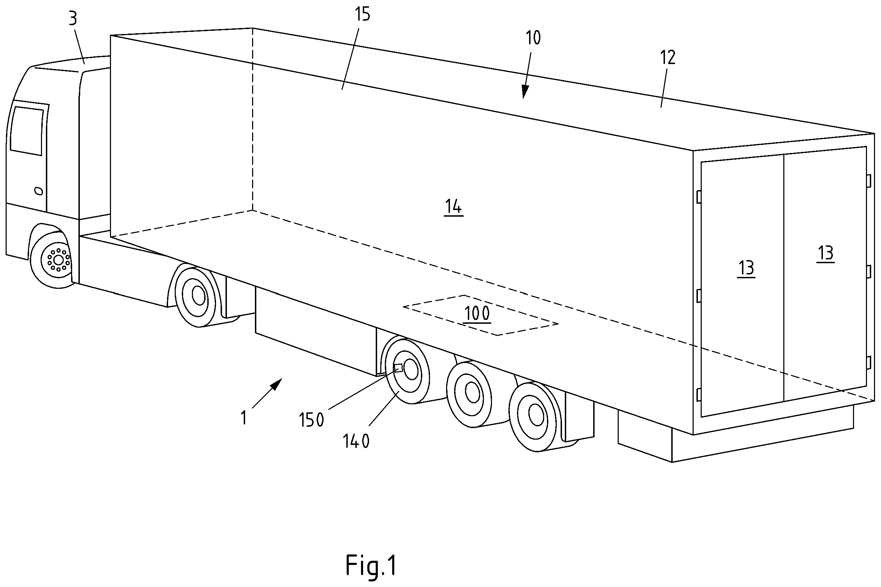

Fig. 1 ist eine schematische Darstellung einer beispielhaften Ausführungsform eines Straßennutzfahrzeugs 1 gemäß der Erfindung, beispielsweise nach dem fünften Aspekt der Erfindung.

Das gezeigte Fahrzeug 1 ist ein Nutzfahrzeug 1, genauer ein Anhänger 1, genauer noch ein Sattelauflieger 1 mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern.

In dem Fahrzeug 1 ist eine Vorrichtung 100 (z.B. gemäß dem vierten beispielhaften Aspekt) vorgesehen, welche dazu eingerichtet sein kann, Kommunikationssignale von mindestens einer Reifendrucksensoranordnung 150 zu empfangen, wobei die ungefähre Position der Vorrichtung 100 am Fahrzeug 1 gestrichelt angedeutet ist. Bei der Vorrichtung 100 kann es sich beispielsweise um eine Telematikeinheit des Fahrzeugs 1 handeln. An zumindest einem der Räder 140 ist ein Reifendrucksensor 150 angeordnet. Dieser sendet Funksignale, welche von der Vorrichtung 100 empfangen werden.

Der Sattelauflieger 1 wird von einem Zugfahrzeug 3 gezogen.

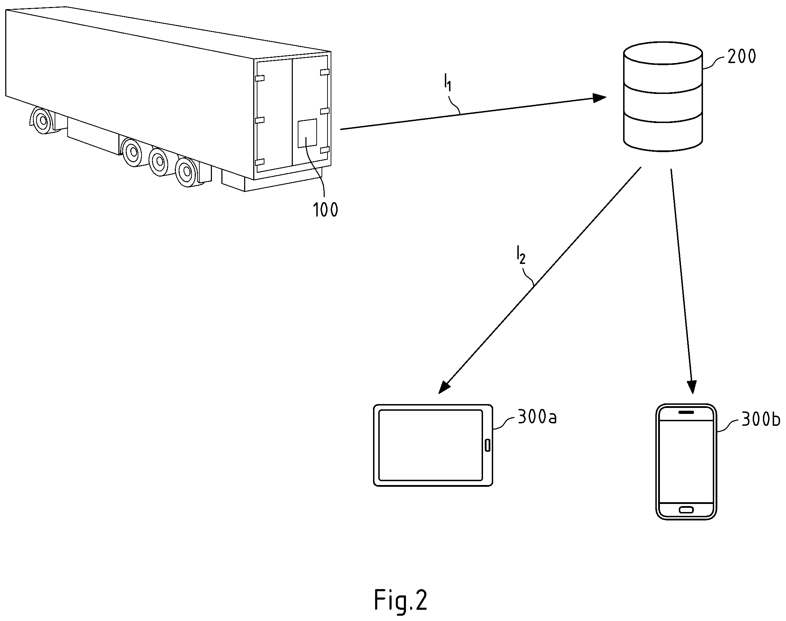

Fig. 2 zeigt ein System gemäß den Aspekten der Erfindung. Ein Straßennutzfahrzeug umfasst die Vorrichtung 100 (z.B. gemäß dem vierten beispielhaften Aspekt). Ferner gezeigt ist ein Server 200 (z.B. gemäß dem sechsten beispielhaften Aspekt) sowie zwei Endgeräte 300a, 300b (z.B. gemäß dem siebten beispielhaften Aspekt).

Die Vorrichtung 100 empfängt Funksignale von nicht dargestellten Reifendrucksensoren des Straßennutzfahrzeugs und detektiert darauf basierend eine Funktionsstörung zumindest eines Reifendrucksensors. Daraufhin ruft die Vorrichtung 100 einen Störungskontext ab und übermittelt diesen in einer Information I₁ an den Server 200. Optional bestimmt die Vorrichtung 100 eine Kategorie der Funktionsstörung und fügt diese dem Störungskontext bei. Der Server 200 empfängt den Störungskontext als Information I₁, bestimmt eine Kategorie der Funktionsstörung und sendet ein Funktionsstörungssignal als Information I₂ an das Endgerät 300a, 300b. Beispielsweise kann der Server eine zu der (z.B. Kategorie der) Funktionsstörung passende Gegenmaßnahme bestimmen und zumindest einem von Vorrichtung 100 bzw. Straßennutzfahrzeug umfassend Vorrichtung 100 und/oder Endgerät 300a, 300b mitteilen. Auch kann das Störungssignal an das Straßennutzfahrzeug gesendet werden. Das Endgerät 300a, 300b kann basierend auf dem Funktionsstörungssignal eine Kategorie die Funktionsstörung bestimmen und eine Gegenmaßnahme bestimmen, die es beispielsweise als Indikation an den Server 200 und/oder an die Vorrichtung 100 mitteilt.

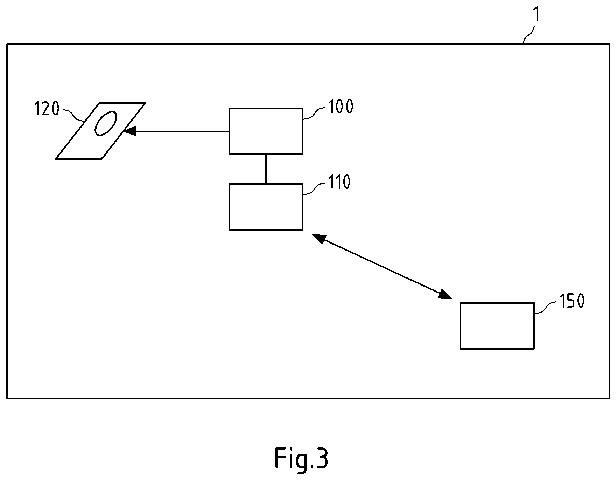

Fig. 3 ist eine vereinfachte Darstellung von Komponenten innerhalb der Straßennutzfahrzeugs (z.B. gemäß dem fünften Aspekt) umfassend die Vorrichtung 100 (z.B. gemäß dem vierten Aspekt), sowie einen Speicher 120 und eine Empfangseinrichtung 110 sowie einen Reifendrucksensor 150. Beispielsweise kann die Empfangseinrichtung 110 dazu eingerichtet sein, Funksignale von dem Reifendrucksensor 150 zu empfangen und an die Vorrichtung 100 weiterzuleiten (beispielsweise kabelgebunden). Die an der Vorrichtung 100 empfangenen Signale werden weiterhin als Funksignale bezeichnet, da sie von dem Reifendrucksensor 150 drahtlos versendet wurden. Beispielsweise können von dem Speicher 120 zumindest Teile des Störungskontextes abgerufen werden (z.B. zusätzlich zu Informationen aus den Funksignalen), welcher sodann an eine weitere Vorrichtung, z.B. an einen Server übermittelt werden.

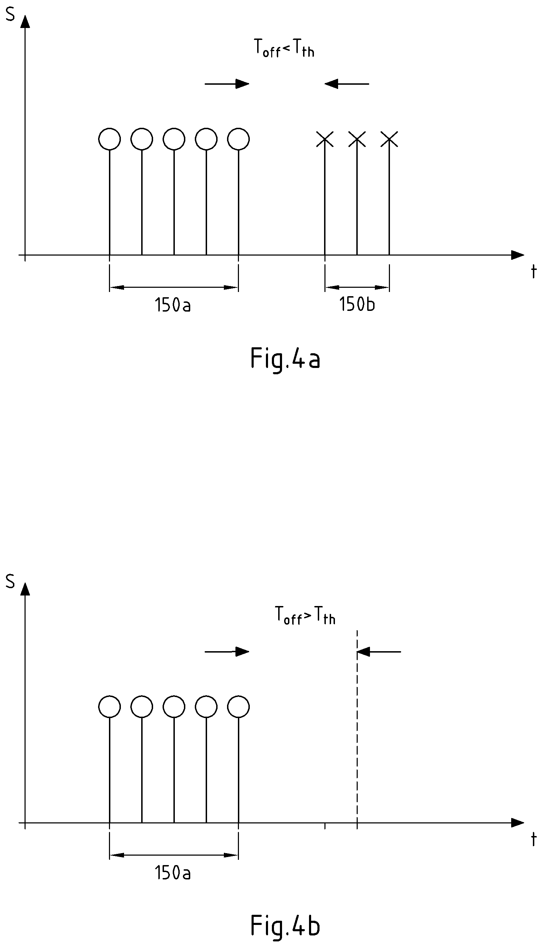

Fig. 4a,b zeigen beispielhafte Szenarien von Funksignalen, beispielsweise empfangen in einem Verfahren gemäß dem ersten beispielhaften Aspekt von einem oder mehreren Reifendrucksensoren.

Fig. 4a zeit wie in einem ersten Zeitraum, in welchem von einem Reifendrucksensor 150a Funksignale empfangen werden. Die Funksignale werden in regelmäßigen zeitlichen Intervallen empfangen. Es folgt eine Phase mit Länge T_{off}, während derer kein Signal des Reifendrucksensors 150a mehr empfangen wird. Danach werden wieder Funksignale empfangen, diesmal von einem Reifendrucksensor 150b. Beispielsweise kann eine Länge der Pause zwischen den Funksignalen von Reifendrucksensor 150a und Reifendrucksensor 150b ausgewertet werden. Die Pause T_{off} kann beispielsweise unterhalb von einem Schwellwert Tₜₕ liegen, sodass ein temporärer Ausfall, nicht jedoch eine Montage eines reifendrucksensorlosen Rads vermutet wird. Werden die Funksignale des Reifendrucksensors 150b ordnungsgemäß empfangen (z.B. ohne Fehlercodes, als Teil einer Anlernphase und/oder im geforderten Format), kann von einem konformen Radwechsel ausgegangen werden, sodass keine Störung gemeldet wird. Alternativ kann festgestellt werden, dass der Reifendrucksensor 150b einen ungeeigneten Typ hat, Fehlerkodes sendet, ohne Anlernen eingesetzt ist und/oder unplausible Werte meldet. In diesem Falle kann von einer Funktionsstörung ausgegangen werden, beispielsweise einer nicht-konformen Änderung der Fahrzeugausstattung und/oder einem Konfigurationsfehler.

Fig. 4b zeigt ein Szenario, in welchen Funksignale eines Reifendrucksensors ersatzlos enden über eine Dauer T_{off}, welche oberhalb eines zeitlichen Schwellwerts Tₜₕ liegt. Zugrundeliegende Ursachen (Kategorien von Funktionsstörungen) können beispielsweise ein Defekt des Empfängers und/oder des Reifendrucksensors sein. Alternativ kann ein Radwechsel zu einem Rad ohne Reifendrucksensor vorgenommen worden sein (nicht-konforme Änderung der Fahrzeugausstattung). Wenn die Funksignale während der Fahrt versiegen, kann von einem Defekt ausgegangen werden. Stoppen Funksignale aller Reifendrucksensoren des Fahrzeugs, kann von einem Defekt der Empfangsvorrichtung ausgegangen werden. Hören die Funksignale jedoch während eines Stillstands auf, sind sowohl eine nicht-konforme Änderung der Fahrzeugausstattung als auch ein Defekt denkbar.

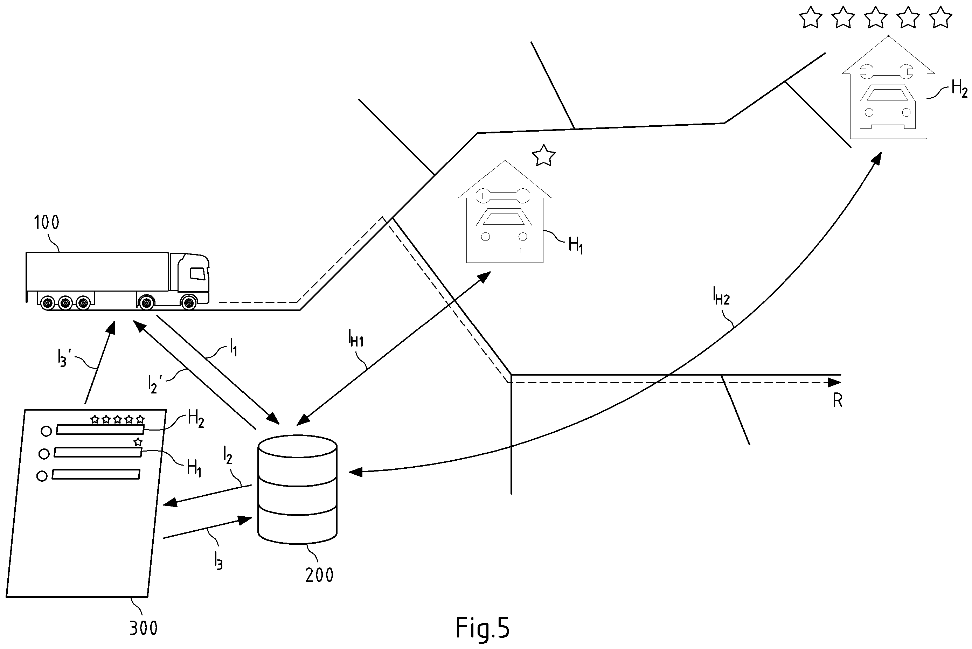

Fig. 5 zeigt ein Ausführungsbeispiel, in welchem ein Straßennutzfahrzeug umfassend die Vorrichtung 100 (z.B. gemäß dem vierten beispielhaften Aspekt), ein Server 200 (z.B. gemäß dem sechsten beispielhaften Aspekt), sowie ein Endgerät 300 (z.B. gemäß dem siebten beispielhaften Aspekt) auf eine Funktionsstörung reagieren. Wie in Fig. 2 gezeigt sendet Vorrichtung 100 einen Störungskontext als I₁ an den Server 200. Dieser bestimmt eine Kategorie von Funktionsstörung und kann hierauf basierend ein Funktionsstörungssignal I₂ an Endgerät 300 aussenden und/oder ein Funktionsstörungssignal I₂' an Vorrichtung 100. Das Funktionsstörungssignal kann beispielsweise indikativ für eine Gegenmaßnahme sein, beispielsweise eine Reparaturmaßnahme.

Im Server 200 können historische Daten vorgehalten werden, aus welchen sich Bewertungen (dargestellt durch Sterne) für zukünftige Herkünfte von Reifendrucksensoren wie die Werkstätten H₁ und H₂ ableiten lassen. Werkstatt H₂ hat sich in der Vergangenheit durch erfolgreiche Reparaturen (z.B. konforme Reifendrucksensoren, korrektes Anlernen und/oder lange störfreie Betriebsdauern) ausgezeichnet, während Werkstatt H₁ eine schlechtere Bewertung erzielt. Server 200 und/oder Endgerät 300 können nun als Gegenmaßnahme gegen die Funktionsstörung unter anderem eine Werkstatt H₁, H₂ auswählen. Die Auswahl kann beispielsweise auf der jeweiligen Bewertung basieren. Zusätzlich kann noch berücksichtigt werden, wie lange ein Umweg wäre, beispielsweise von einer geplanten Route R des Straßennutzfahrzeugs, was eine Ankunftszeit wäre und ob die jeweilige Werkstatt H₁, H₂ zur entsprechenden Zeit geöffnet ist und einen Termin anbieten kann, und/oder Kombinationen hieraus. Beispielsweise kann der Server 200 mit zumindest einer oder beiden Werkstätten H₁, H₂ durch Interaktionen I_{H1}, I_{H2} interagieren und Verfügbarkeiten zu Zeiten abfragen, welche für das Straßennutzfahrzeug, unter Berücksichtigung einer geplanten Route R, relevant sind. Beispielsweise kann basierend auf Verfügbarkeit, Bewertung und/oder Zeitverlust eine Optimierung stattfinden, eine der Werkstätten (z.B. H₁) als (z.B. einzige) Option vorschlägt. Auch kann eine Werkstatt H₁, H₂ automatisch gebucht werden. Beispielsweise kann ferner die ausgewählte Werkstatt H₁, H₂ als Ziel vorgegeben werden und/oder eine Routenführung R automatisch dorthin geändert werden.

Auch kann das Endgerät 300 in die Auswahl einer Gegenmaßnahme involviert werden. Beispielsweise kann der Server 200 dem Endgerät 300 Bewertungen und/oder vorgeschlagene Werkstätten H₁, H₂ übermitteln. Das Endgerät 300 kann diese einem Nutzer (z.B. Flottenmanager) anzeigen, der daraufhin eine informierte Entscheidung treffen kann, welche Gegenmaßnahme zu wählen ist. Die Auswahl der Gegenmaßnahme kann dann beispielsweise an den Server 200 als Indikation I₃ zurückgespielt werden, der beispielsweise seinerseits Vorrichtung 100 (z.B. mit einer Indikation, die Routenführung anzupassen) und/oder die ausgewählte Werkstätte H1, H2 kontaktiert (z.B. zur Terminplanung und/oder Übermittlung von Diagnoseinformationen, z.B. dem Störungskontext). Alternativ oder zusätzlich kann das Endgerät 300 eine Indikation einer Gegenmaßnahme (z.B. ausgewählte Werkstätte als Ziel) direkt an die Vorrichtung 100 übermitteln als Indikation I₃'.

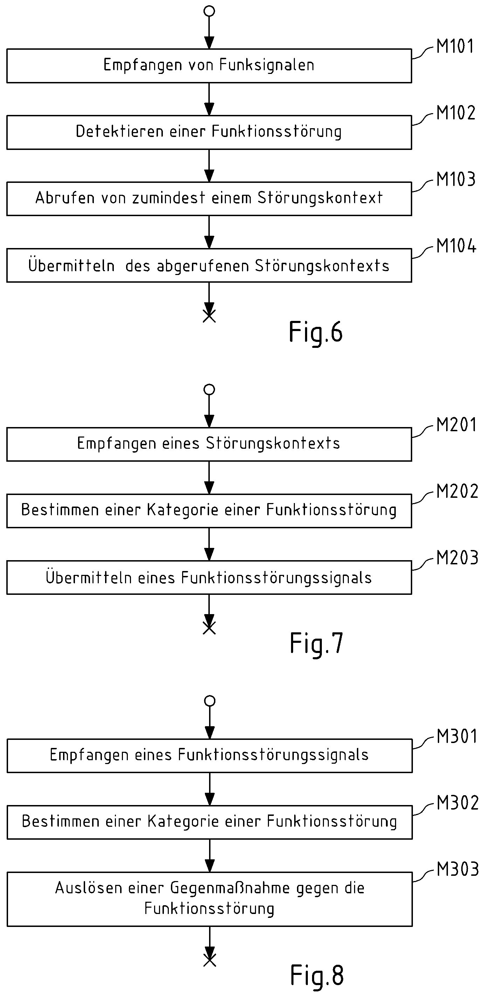

Fig. 6 ist ein Flussdiagramm, welches das Verfahren gemäß dem ersten Aspekt illustriert, welches beispielsweise von einer Vorrichtung 100 gemäß dem vierten Aspekt ausgeführt wird.

Ein Schritt M101 umfasst ein Empfangen von Funksignalen von einem oder mehreren Reifendrucksensoren (z.B. zumindest 2, 3, 4, 5, 6, 7, 8, 10, 12, oder 14) des Straßennutzfahrzeugs.

Ein Schritt M102 umfasst ein Detektieren (z.B. basierend auf einem Vergleich zwischen einem erwarteten Signal von dem Reifendrucksensor und/oder einer erwarteten Anzahl von Reifendrucksensoren mit tatsächlich empfangenen Signalen und/oder einer tatsächlich festgestellten Anzahl von Reifendrucksensoren) (z.B. basierend auf einer vordefinierten Zeitdauer) einer Funktionsstörung (z.B. Ausfall)(z.B. Fehlen an einem Fahrzeug) eines Reifendrucksensors (z.B. des einen oder der mehreren Reifendrucksensoren) (z.B. per Funk verbunden mit einer Vorrichtung, die das Verfahren nach dem ersten Aspekt ausführt und/oder steuert) basierend auf den empfangenen Funksignalen.

Ein Schritt M103 umfasst ein basierend auf dem Detektieren (z.B. und/oder der detektierten Funktionsstörung), Abrufen (z.B. von Sensoren, z.B. satellitenbasierten Positionssensoren; z.B. aus einem Speicher einer Vorrichtung, die das Verfahren nach dem ersten Aspekt ausführt und/oder steuert; z.B. von anderen Reifendrucksensoren des Straßennutzfahrzeugs) von zumindest einem (z.B. für die Funktionsstörung des Reifendrucksensors spezifischer) Störungskontext des Straßennutzfahrzeugs (z.B. umfassend Zustandsinformationen des Reifendrucksensors, z.B. vor einer Funktionsstörung).

Ein Schritt M104 umfasst ein Übermitteln (z.B. über eine Kommunikationsschnittstelle, insbesondere ein Funkschnittstelle, insbesondere ein zelluläres Kommunikationsnetz) des abgerufenen Störungskontexts (z.B. indikativ für eine Störung, z.B. wirkt als Störungsindikation) an eine entfernte Vorrichtung (z.B. Server; z.B. welche das Verfahren nach dem zweiten Aspekt ausführt und/oder steuert).

Fig. 7 ist ein Flussdiagramm, welches das Verfahren gemäß dem zweiten Aspekt illustriert, welches beispielsweise von einer Vorrichtung 200 gemäß dem sechsten Aspekt ausgeführt wird.

Ein Schritt M201 umfasst ein Empfangen eines (z.B. für eine Funktionsstörung eines Reifendrucksensors spezifischer) Störungskontexts von einem bereiften Straßennutzfahrzeug (z.B. von einer Vorrichtung, die das Verfahren nach dem ersten Aspekt ausführt und/oder steuert).

Ein Schritt M202 umfasst ein Bestimmen einer Kategorie (z.B. und/oder Ursache) einer Funktionsstörung (z.B. Ausfall) eines Reifendrucksensors des Straßennutzfahrzeug basierend auf dem empfangenen Störungskontext (z.B. auch Ausbleiben von Funksignalen von einem Straßennutzfahrzeug, was auf Funktionsstörung (z.B. Ausfall) eines Empfängers für Signale von Reifendrucksensoren oder einer Telematik hindeuten kann).

Ein Schritt M203 umfasst ein Übermitteln eines Funktionsstörungssignals (z.B. indikativ für Funktionsstörung)(z.B. umfassend zumindest Teile des Störungskontexts) basierend auf der bestimmten Kategorie an eine entfernte Vorrichtung (z.B. Nutzerterminal; z.B. Vorrichtung, die das Verfahren nach dem dritten Aspekt ausführt und/oder steuert) (z.B. wobei das Funktionsstörungssignal die Kategorie angibt)(z.B. wobei das Funktionsstörungssignal eine Handlungsanweisung indiziert und/oder beinhaltet)(z.B. und/oder an das Straßennutzfahrzeug).

Fig. 8 ist ein Flussdiagramm, welches das Verfahren gemäß dem dritten Aspekt illustriert, welches beispielsweise von einer Vorrichtung 200 gemäß dem siebten Aspekt ausgeführt wird.

Ein Schritt M301 umfasst ein Empfangen eines Funktionsstörungssignals von einer entfernten Vorrichtung (z.B. Vorrichtung, die das Verfahren nach dem zweiten Aspekt ausführt und/oder steuert).

Ein Schritt M302 umfasst ein Bestimmen einer Kategorie einer Funktionsstörung (z.B. Ausfall) eines Reifendrucksensors eines Straßennutzfahrzeugs basierend auf dem empfangenen Funktionsstörungssignal.

Ein Schritt M303 umfasst ein Auslösen einer Gegenmaßnahme gegen die Funktionsstörung (z.B. Nutzerinteraktion, beispielsweise Hinweis, beispielsweise Anzeige Karte (z.B. mit Bewertungen von zukünftigen und/oder vergangenen Herkünften); z.B. automatisierte Gegenmaßnahme, wie automatische Routenführung zu Werkstatt oder Stilllegung Fahrzeug) basierend auf der bestimmten Kategorie der Funktionsstörung.

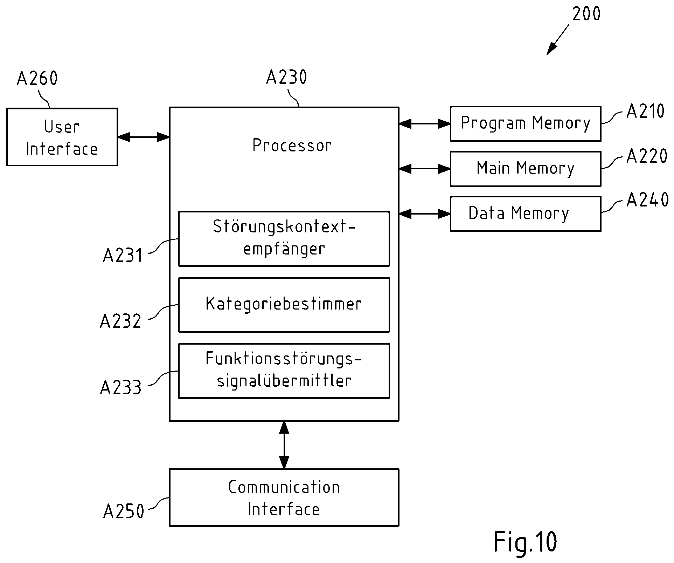

Fig. 10 zeigt ein Ausführungsbeispiel einer Vorrichtung 100 gemäß dem vierten Aspekt. Die Vorrichtung 100 kann einen Programmspeicher A110, einen Hauptspeicher A120 und einen Datenspeicher A140 umfassen. Die Vorrichtung 100 kann ferner eine Benutzerschnittstelle A160 umfassen, die es beispielsweise einem Benutzer der Vorrichtung ermöglichen kann, mit ihr zu interagieren. Die Vorrichtung 100 kann ferner eine Kommunikationsschnittstelle A150 umfassen, die beispielsweise so konfiguriert sein kann, dass sie mit mindestens einer anderen Vorrichtung (z.B. Server gemäß dem sechsten Aspekt und/oder Reifendrucksensor) kommuniziert. Insbesondere kann die Kommunikationsschnittstelle A150 dazu eingerichtet sein, das Kommunikationssignale zu senden und/oder zu empfangen. Die Vorrichtung 100 kann mindestens die Funktionseinheiten A131 bis A134 umfassen. Die Funktionseinheiten können hier und im Folgenden beispielsweise Softwaremodulen, Teilen eines Computerprogramms, Computerbefehlen, funktionalen elektronischen Schaltungen, mit der Vorrichtung 100 verbundenen funktionalen Komponenten und/oder Kombinationen hieraus entsprechen. Die Funktionseinheiten korrespondieren mit den jeweiligen Funktionen, wie sie im Flussdiagramm in Figur 6 dargestellt sind. Der Funksignalempfänger A131 und der Störungskontextübermittler A134 können beispielweise mit der Kommunikationsschnittstelle A150 zusammenwirken und/oder diese Steuern.

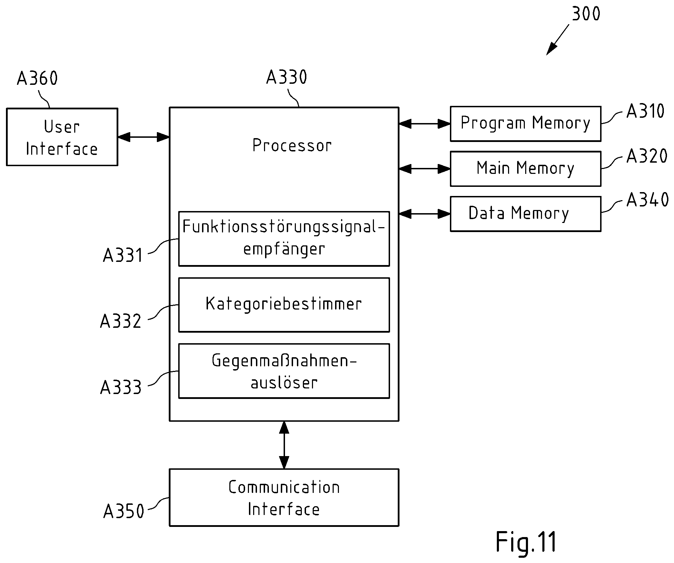

Fig. 11 zeigt ein Ausführungsbeispiel einer Vorrichtung 200 gemäß dem sechsten Aspekt. Die Vorrichtung 200 kann einen Programmspeicher A210, einen Hauptspeicher A220 und einen Datenspeicher A240 umfassen. Die Vorrichtung 200 kann ferner eine Benutzerschnittstelle A260 umfassen, die es beispielsweise einem Benutzer der Vorrichtung ermöglichen kann, mit ihr zu interagieren. Die Vorrichtung 200 kann ferner eine Kommunikationsschnittstelle A250 umfassen, die beispielsweise so konfiguriert sein kann, dass sie mit mindestens einer anderen Vorrichtung (z.B. Vorrichtung gemäß dem sechsten Aspekt und/oder Endgerät gemäß dem siebten Aspekt) kommuniziert. Insbesondere kann die Kommunikationsschnittstelle A250 dazu eingerichtet sein, das Kommunikationssignale zu senden und/oder zu empfangen. Die Vorrichtung 200 kann mindestens die Funktionseinheiten A231 bis A233 umfassen. Die Funktionseinheiten können hier und im Folgenden beispielsweise Softwaremodulen, Teilen eines Computerprogramms, Computerbefehlen, funktionalen elektronischen Schaltungen, mit der Vorrichtung 200 verbundenen funktionalen Komponenten und/oder Kombinationen hieraus entsprechen. Die Funktionseinheiten korrespondieren mit den jeweiligen Funktionen, wie sie im Flussdiagramm in Figur 7 dargestellt sind. Der Störungskontextempfänger A231 und der Funktionsstörungssignalübermittler A234 können beispielweise mit der Kommunikationsschnittstelle A250 zusammenwirken und/oder diese Steuern.

Fig. 11 zeigt ein Ausführungsbeispiel einer Vorrichtung 300 gemäß dem siebten Aspekt. Die Vorrichtung 300 kann einen Programmspeicher A310, einen Hauptspeicher A320 und einen Datenspeicher A340 umfassen. Die Vorrichtung 300 kann ferner eine Benutzerschnittstelle A360 umfassen, die es beispielsweise einem Benutzer der Vorrichtung ermöglichen kann, mit ihr zu interagieren. Die Vorrichtung 300 kann ferner eine Kommunikationsschnittstelle A350 umfassen, die beispielsweise so konfiguriert sein kann, dass sie mit mindestens einer anderen Vorrichtung (z.B. Vorrichtung gemäß dem vierten Aspekt und/oder Endgerät gemäß dem siebten Aspekt) kommuniziert. Insbesondere kann die Kommunikationsschnittstelle A350 dazu eingerichtet sein, das Kommunikationssignale zu senden und/oder zu empfangen. Die Vorrichtung 300 kann mindestens die Funktionseinheiten A331 bis A333 umfassen. Die Funktionseinheiten können hier und im Folgenden beispielsweise Softwaremodulen, Teilen eines Computerprogramms, Computerbefehlen, funktionalen elektronischen Schaltungen, mit der Vorrichtung 300 verbundenen funktionalen Komponenten und/oder Kombinationen hieraus entsprechen. Die Funktionseinheiten korrespondieren mit den jeweiligen Funktionen, wie sie im Flussdiagramm in Figur 8 dargestellt sind. Der Störungsstörungsempfänger A331 und der Gegenmaßnahmenauslöser A334 können beispielweise mit der Kommunikationsschnittstelle A350 zusammenwirken und/oder diese Steuern. Beispielsweise kann der Gegenmaßnahmenauslöser alternativ oder zusätzlich mit der Benutzerschnittstelle A360 (z.B. (Touch-)Display und/oder Knöpfe) zusammenwirken.

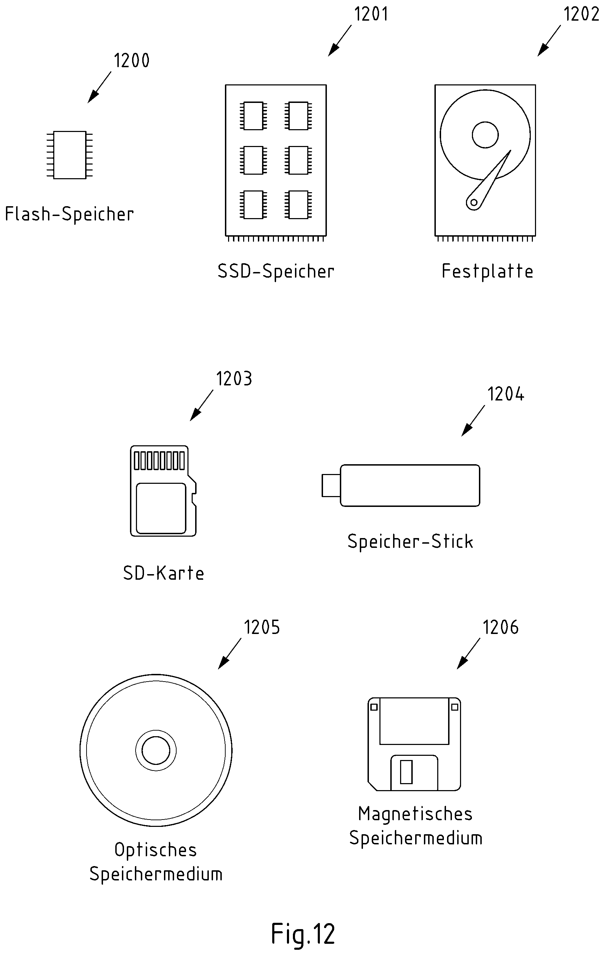

Fig. 12 ist eine schematische Darstellung von Beispielen von materiellen und nichtvergänglichen computerlesbaren Speichermedien gemäß der vorliegenden Erfindung, die beispielsweise zur Implementierung des Programm- und/oder Hauptspeichers A110, A120, A140, A210, A220, A240, A310, A320, A340 der Fig. 6-8 gezeigt, verwendet werden können. Fig. 12 zeigt einen Flash-Speicher 1200, der z.B. auf eine Leiterplatte gelötet oder gebondet sein kann, ein Solid-State-Laufwerk 1201 mit einer Vielzahl von Speicherchips (z.B. Flash-Speicherchips), eine magnetische Festplatte 1202, eine Secure Digital (SD)-Karte 1203, einen Universal Serial Bus (USB)-Speicherstick 1204, ein optisches Speichermedium 1205 (wie z.B. eine CD-ROM oder DVD) und ein magnetisches Speichermedium 1206.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Ein Verfahren zur Reifendrucksensorüberwachung eines bereiften Straßennutzfahrzeugs (1), umfassend
- Empfangen von Funksignalen von einem oder mehreren Reifendrucksensoren des Straßennutzfahrzeugs (1),
- Detektieren einer Funktionsstörung eines Reifendrucksensors (150) basierend auf den empfangenen Funksignalen,
- basierend auf dem Detektieren, Abrufen von zumindest einem Störungskontext des Straßennutzfahrzeugs (1), und
- Übermitteln des abgerufenen Störungskontexts an eine entfernte Vorrichtung.

2. Das Verfahren gemäß Anspruch 1, wobei die Funksignale umfassen und/oder charakterisiert sind durch zumindest eines des folgenden
- eine Fehlermeldung,
- einen Funktionsumfang des Reifendrucksensors (150),
- eine Dauer seit einem letzten Empfangen von Funksignalen von dem Reifendrucksensor (150),
- ein Sendeintervall des Reifendrucksensors (150),
- ein Herstellungsdatum des Reifendrucksensors (150),
- eine Betriebsdauer des Reifendrucksensors (150),
- eine Identifikation des Reifendrucksensors (150), und/oder
- eine Messung des Reifendrucksensors (150), insbesondere ein Reifendruck, ein Drehwinkel, eine Drehfrequenz, eine Drehrichtung und/oder ein Batteriezustand.

3. Das Verfahren gemäß Anspruch 1 oder 2, wobei die Funktionsstörung zumindest einer der folgenden Kategorien angehört
- nicht-konforme Änderung der Fahrzeugausstattung, insbesondere
- ein Fehlen des Reifendrucksensors (150),
- ein eingeschränkter Funktionsumfang des Reifendrucksensors (150),
- ein ungeeigneter Typ des Reifendrucksensors (150),
- Defekt des Reifendrucksensors (150), oder
- Konfigurationsfehler des Reifendrucksensors (150).

4. Das Verfahren gemäß einem der Ansprüche 1 bis 3, wobei der Störungskontext zumindest eines der folgenden umfasst
- zumindest ein Fahrzeugdatum, insbesondere
- zumindest ein Betriebsdatum des Reifendrucksensors (150), insbesondere ein Reifendruck, eine Reifentemperatur, eine Änderung einer Reifentemperatur, eine Änderung eines Reifendrucks, eine Beschleunigung, ein Sendeintervall, eine Batteriespannung, ein Batterieladezustand, eine Batteriegesundheit, eine Anzahl von Reifendrucksensoren (150), Daten einer Umkonfigurierung, ein Produktionsdatum, und/oder eine Seriennummer,
- zumindest eine Fehlermeldung betreffend den Reifendrucksensor (150), insbesondere eine von dem Reifendrucksensor (150) empfangene Fehlermeldung oder eine basierend auf den empfangenen Funksignalen bestimmte Fehlermeldung,
- zumindest ein Standortdatum, insbesondere ein Ort des Straßennutzfahrzeugs (1), und/oder
- zumindest ein jeweiliger Zeitstempel zumindest einer Erfassung eines oder mehrerer Fahrzeugdaten,
- zumindest ein Stammdatum, insbesondere
- ein Fertigungsdatum des Straßennutzfahrzeugs (1),
- eine Typgenehmigung des Straßennutzfahrzeugs (1), und/oder
- eine Fahrzeugausstattung des Straßennutzfahrzeugs (1), insbesondere Anzahl der Räder und/oder Reifendrucksensoren (150).

5. Das Verfahren gemäß einem der Ansprüche 1 bis 4, ferner umfassend
- Bestimmen der Kategorie der Funktionsstörung eines Reifendrucksensors (150) des Straßennutzfahrzeug (1) basierend auf den empfangenen Funksignalen und/oder dem Störungskontext.

6. Ein Verfahren zur Überwachung eines oder mehrerer bereifter Straßennutzfahrzeuge (1), umfassend
- Empfangen eines Störungskontexts von einem bereiften Straßennutzfahrzeug (1),
- Bestimmen einer Kategorie einer Funktionsstörung eines Reifendrucksensors (150) des Straßennutzfahrzeugs (1) basierend auf dem empfangenen Störungskontext, und
- Übermitteln eines Funktionsstörungssignals basierend auf der bestimmten Kategorie an eine entfernte Vorrichtung.

7. Das Verfahren gemäß Anspruch 6, ferner umfassend
- Auslösen einer Gegenmaßnahme gegen die Funktionsstörung basierend auf der bestimmten Kategorie der Funktionsstörung und/oder
- wobei das Funktionsstörungssignals dazu konfiguriert ist, eine Gegenmaßnahme gegen die Funktionsstörung auszulösen, insbesondere
- zumindest eine Nutzerinteraktion
- eine Auslösung einer Routenführung zu der zukünftigen Herkunft (H₁, H₂), oder
- eine Stilllegung des Straßennutzfahrzeugs (1).

8. Das Verfahren gemäß Anspruch 6 oder 7, ferner umfassend
- Abrufen historischer Installationsdaten zu einer vergangenen Herkunft (H₁, H₂) des Reifendrucksensors (150), und
- Bestimmen einer Bewertung der vergangenen Herkunft (H₁, H₂) zumindest teilweise basierend auf der bestimmten Kategorie der Funktionsstörung.

9. Das Verfahren gemäß einem der Ansprüche 6 bis 8, ferner umfassend
- Bestimmung von zumindest einer zukünftigen Herkunft (H₁, H₂) basierend auf dem empfangenen Störungskontext und/oder der bestimmten Kategorie und/oder einer bestimmten Bewertung einer vergangenen Herkunft (H₁, H₂), und
- Übermitteln einer Indikation der bestimmten zukünftigen Herkunft (H₁, H₂) an die entfernte Vorrichtung.

10. Das Verfahren gemäß Anspruch 9, ferner umfassend
- Übermitteln zumindest von Teilen des Störungskontexts und/oder der bestimmten Kategorie an die bestimmte zukünftige Herkunft (H₁, H₂) und/oder
- Abfragen eines Termins zur Behebung der Funktionsstörung bei der bestimmten zukünftigen Herkunft (H₁, H₂), insbesondere basierend auf einer Position des Straßennutzfahrzeugs (1) und/oder einer vorausgesagten Ankunftszeit des Straßennutzfahrzeugs (1) bei der bestimmten zukünftigen Herkunft (H₁, H₂).

11. Ein Verfahren zur Überwachung eines oder mehrerer bereifter Straßennutzfahrzeuge (1), umfassend
- Empfangen eines Funktionsstörungssignals von einer entfernten Vorrichtung,
- Bestimmen einer Kategorie einer Funktionsstörung eines Reifendrucksensors (150) eines Straßennutzfahrzeugs (1) basierend auf dem empfangenen Funktionsstörungssignal, und
- Auslösen einer Gegenmaßnahme gegen die Funktionsstörung basierend auf der bestimmten Kategorie der Funktionsstörung.

12. Das Verfahren gemäß Anspruch 11, ferner umfassend
- Empfangen einer Indikation der bestimmten zukünftigen Herkunft (H₁, H₂) von der entfernten Vorrichtung und/oder
- Empfangen einer Bewertung einer vergangenen Herkunft (H₁, H₂) von einer entfernten Vorrichtung.

13. Eine Vorrichtung (100) zur Reifendrucküberwachung eines bereiften Straßennutzfahrzeugs (1), umfassend Mittel zur Ausführung und/oder Steuerung des Verfahrens nach einem der Ansprüche 1 bis 5.

14. Ein bereiftes Straßennutzfahrzeug (1) umfassend eine Vorrichtung (100) gemäß Anspruch 13.

15. Ein System umfassend
- eine Vorrichtung (200) zur Überwachung eines oder mehrerer bereifter Straßennutzfahrzeuge, umfassend Mittel zur Ausführung und/oder Steuerung des Verfahrens nach einem der Ansprüche 6 bis 10, und
- eine Vorrichtung (100) gemäß Anspruch 13 und/oder ein Straßennutzfahrzeug (1) gemäß Anspruch 14.
